(19) Europäisches Patentamt / European Patent Office / Office européen des brevets

(11) **EP 3 520 949 B1**

(12) **EUROPEAN PATENT SPECIFICATION**

(45) Date of publication and mention
of the grant of the patent:
**02.08.2023 Bulletin 2023/31**

(21) Application number: **17884005.4**

(22) Date of filing: **18.12.2017**

(51) International Patent Classification (IPC):
**B23K 13/08** *(2006.01)*   **B23K 13/00** *(2006.01)*
**B23K 13/02** *(2006.01)*   **B21C 37/08** *(2006.01)*

(52) Cooperative Patent Classification (CPC):
**B23K 13/025; B23K 13/08; B21C 37/08**

(86) International application number:
**PCT/JP2017/045362**

(87) International publication number:
**WO 2018/117039 (28.06.2018 Gazette 2018/26)**

(54) **WELDING DEVICE FOR ELECTRIC RESISTANCE WELDED PIPE AND WELDING METHOD FOR ELECTRIC RESISTANCE WELDED PIPE**

SCHWEISSVORRICHTUNG FÜR EIN WIDERSTANDSGESCHWEISSTES ROHR UND SCHWEISSVERFAHREN FÜR EIN WIDERSTANDSGESCHWEISSTES ROHR

DISPOSITIF DE SOUDAGE POUR UN TUYAU SOUDÉ PAR RÉSISTANCE ÉLECTRIQUE ET PROCÉDÉ DE SOUDAGE POUR UN TUYAU SOUDÉ PAR RÉSISTANCE ÉLECTRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.12.2016  JP 2016249177**

(43) Date of publication of application:
**07.08.2019  Bulletin 2019/32**

(73) Proprietor: **Nippon Steel Corporation
Tokyo 100-8071 (JP)**

(72) Inventor: **HIROTA, Yoshiaki
Tokyo 100-8071 (JP)**

(74) Representative: **Vossius & Partner
Patentanwälte Rechtsanwälte mbB
Siebertstrasse 3
81675 München (DE)**

(56) References cited:
**JP-A- S60 124 482      JP-A- S60 124 482
JP-A- S62 176 085      JP-A- S62 176 085
JP-A- 2015 134 379      JP-A- 2015 134 379
JP-U- S5 226 623**

**Description**

[Technical Field]

The present invention relates to an electric resistance welded pipe welding device that bends a running metal strip into a cylindrical shape to inductively heat the bent metal strip and welds both end face portions of the metal strip together by current induced in the metal strip and an electric resistance welded pipe welding method using this electric resistance welded pipe welding device.

[Background Art]

In general, examples of a method of manufacturing a metal pipe include a method of manufacturing a seamless pipe by making a hole into a metal billet and a method of manufacturing a pipe by extrusion, in addition to methods of manufacturing an electric resistance welded pipe, a spiral pipe, and so on, in which a metal strip is bent and welded into a pipe shape.

Electric resistance welded pipes are produced in large quantities because they are high in productivity in particular and further can be manufactured inexpensively. As for such an electric resistance welded pipe, a running metal strip is formed into a cylindrical shape to form an open pipe and then the open pipe is formed into a pipe shape by applying a high-frequency current to end face portions of the open pipe that face across an opening portion (to be simply referred to as "end portions of the open pipe" hereinafter) to increase the temperature up to a melting temperature and in this state, pressure-welding end faces of both the end face portions of the open pipe together by rolls (squeeze rolls). On this occasion, as a method of supplying the current to the end portions of the open pipe, there are two methods: the first is a method in which an induction coil (solenoid coil) is provided on, for example, the open pipe and a primary current is made to flow through the induction coil, to thereby directly generate an induced current in the open pipe (see, for example, Patent Documents 1, 2); and the second is a method in which a metal electrode is pressed to the end portions of the open pipe to directly supply the current thereto from a power supply (see, for example, Patent Document 3). At this time, as the current to be supplied to the induction coil or the electrode, a high-frequency current of about 100 to 400 kHz is used generally. In order to inhibit, out of the induced currents induced by this high-frequency current, the induced current that does not contribute to welding by tending to circulate around an inner periphery of the open pipe, a ferromagnet called an impeder is arranged at the inner surface side of the pipe in many cases.

In the above-described first method using the induction coil, the induction coil described in Patent Document 1 is arranged by circulating around an outer periphery of the open pipe. On the other hand, the induction coil described in Patent Document 2 is an air-core coil and is arranged above the opening portion without circulating around an outer periphery of the open pipe so as to form a primary current circuit while striding over the opening portion.

Further, in the second method using the metal electrode, Patent Document 3 describes a device in which in addition to a contactor (contact chip) connected to a power supply for welding whose frequency is about 100 to 400 kHz, a preheating coil connected to another power supply for preheating whose frequency is about 1 to 20 kHz is provided upstream of the contactor. Patent Document 4, disclosing the preamble of claims 1 and 6, describes a high-frequency welding machine.

[Prior Art Document]

[Patent Document]

    [Patent Document 1] International Publication No. 2014/027565
    [Patent Document 2] Japanese Laid-open Patent Publication No. 2015-134379
    [Patent Document 3] Japanese Laid-open Patent Publication No. S62-176085
    [Patent Document 4] Japanese Laid-open Patent Publication No. S60-124482

[Disclosure of the Invention]

[Problems to Be Solved by the Invention]

However, in the case where a conductor part of an induction coil is arranged to circulate around an open pipe and stride over an opening portion of the open pipe like the induction coil described in Patent Document 1, there has been a problem that at the time of welding when manufacturing an electric resistance welded pipe, a strong magnetic field is generated also inside the open pipe and thereby the impeder is burnt out or a rod coupling cutters for cutting beads on an inner surface breaks in some cases, thereby failing to perform a long and stable operation. Further, the induction coil described in Patent Document 2 is arranged to stride over the opening portion of the open pipe and a part of the induction coil overlaps the opening portion in a plan view, thus causing the problem similar to the above. Then, such a problem as the impeder damage or the rod break has been prominent in the case where a small-diameter pipe, for example, a pipe whose inside diameter is about 100 mm or less, in particular, a thick-walled pipe, for example, a pipe whose wall thickness is greater than 6 mm is manufactured by a method of manufacturing an electric resistance welded pipe. Incidentally, in the method described in Patent Document 3, the contactor (contact chip) is used, but in such a case, pipes each having a large diameter are targeted in many cases. Then, in the case of the diameter being large as above, the impeder is not required originally, thus not causing the problem of impeder damage.

Further, due to various pieces of equipment such as leads from the power supply, for example, being provided above the open pipe in the vicinity of the squeeze rolls, there has been a limit to bringing the induction coil itself close to the squeeze rolls in the case where the induction coil circulates around the open pipe like the induction coil described in Patent Document 1. In such a case, there has been a problem that heating efficiency becomes poor because the position of the open pipe where the induced current is generated becomes far from a joint portion. Then, such a problem has been prominent when an intermediate-diameter pipe, for example, a pipe whose inside diameter is about 100 to 700 mm is manufactured by the method of manufacturing the electric resistance welded pipe. Incidentally, in response to the problem of the positional relationship between the induction coil and the squeeze rolls, the preheating coil described in Patent Document 3 does not exhibit any solution because it is connected to the power supply for preheating whose frequency is about 1 to 20 kHz and between the preheating coil and the joint portion, the contactor (contact chip) connected to the power supply for welding whose frequency is about 100 to 400 kHz different from the power supply for preheating is provided.

The present invention has been made in consideration of such points, and an object thereof is to provide an electric resistance welded pipe welding device capable of improving heating efficiency when manufacturing an electric resistance welded pipe while preventing an impeder burnout and an electric resistance welded pipe welding method.

[Means for Solving the Problems]

The present invention is defined in the claims. In order to achieve the aforementioned object, the present invention is an electric resistance welded pipe welding device for manufacturing an electric resistance welded pipe that melts both end face portions, of an open pipe having an opening portion extending in a running direction, both the end face portions that face the opening portion each other from both sides and are made of a pipe material, by induced currents generated by an induction heating means and brings the end face portions into contact with each other at a squeeze roll unit while gradually narrowing a gap of the opening portion and welds the end face portions together, the electric resistance welded pipe welding device including: as the induction heating means, an induction coil composed of a pair of opening-vicinity conductor parts that are extended in the running direction along the end face portions at both sides of the opening portion and are arranged apart from an outer peripheral surface of the open pipe at positions not overlapping the opening portion in a plan view; and a first-portion circulating conductor part that is integrally provided at at least end portions, of the opening-vicinity conductor parts, on the side close to the squeeze roll unit in a longitudinal direction and is arranged apart from the outer peripheral surface of the open pipe so as to circulate around a portion, of the outer peripheral surface of the open pipe, excluding the opening portion.

Incidentally, in the present invention, the size and the shape of the opening portion of the open pipe (including the squeeze roll unit) are determined in advance according to the diameter of the electric resistance welded pipe and a welding condition before manufacturing the electric resistance welded pipe. Accordingly, in the induction heating means of the electric resistance welded pipe welding device, the paired opening-vicinity conductor parts and the first-portion circulating conductor part are determined based on the opening portion and the squeeze roll unit.

According to the present invention, a closed circuit can be formed by arranging the induction coils (opening-vicinity conductor parts) along the opening portion of the open pipe and at the same time, arranging the induction coil (first-portion circulating conductor part) to circulate around the portion excluding the opening portion of the open pipe at at least end portions, of the induction coil, on the squeeze roll unit side and connecting the other end portions of the induction coils (opening-vicinity conductor parts) along the opening portion on the upstream side of the open pipe. This makes it possible to avoid a magnetic flux directly entering an impeder from the induction coil, and at the same time, it becomes possible to reduce the peak and the average current of the induced currents flowing through both the end face portions of the opening portion of the open pipe and reduce the magnetic flux density of the impeder generated by the induced current. As a result, it is possible to prevent damage of the impeder, and such an effect becomes particularly useful when manufacturing a small-diameter pipe, for example, a pipe whose inside diameter is about 100 mm or less, in particular, a thick-walled pipe, for example, a pipe whose wall thickness is greater than 6 mm.

Further, the induction coil of the present invention does not circulate around the open pipe like the conventional induction coil described in Patent Document 1 and a space can be secured above the open pipe, and thus it is possible to bring the induction coil close to the squeeze rolls. This makes it possible to install accessory equipment such as a shield or a measurement device in the space above the open pipe. Further, bringing the induction coil close to the squeeze rolls makes it also possible to improve the heating efficiency (welding efficiency) when manufacturing the electric resistance welded pipe. Then, such an effect becomes useful also when manufacturing an intermediate-diameter pipe, for example, a pipe whose inside diameter is about 100 to 700 mm.

In the electric resistance welded pipe welding device, the induction coil may further include a second-portion circulating conductor part that is integrally provided at end portions, of the opening-vicinity conductor parts, on the side far from the squeeze roll unit in the longitudinal direction and is arranged apart from the outer peripheral surface of the open pipe so as to circulate around the portion, of the outer peripheral surface of the open pipe, excluding the opening portion.

In the electric resistance welded pipe welding device, at the end portions, of the opening-vicinity conductor parts, on the side close to the squeeze roll unit in the longitudinal direction, the first-portion circulating conductor part may be provided in a plurality of layers.

In the electric resistance welded pipe welding device, a ferromagnet may be further arranged in the opening portion on the upstream side in the running direction relative to the induction coil.

The present invention according to another aspect is an electric resistance welded pipe welding method for manufacturing an electric resistance welded pipe that melts both end face portions, of an open pipe having an opening portion extending in a running direction, both the end face portions that face the opening portion each other from both sides and are made of a pipe material, by induced currents generated by an induction heating means and brings the end face portions into contact with each other at a squeeze roll unit while gradually narrowing a gap of the opening portion and welds the end face portions together, in which as the induction heating means, an induction coil composed of a pair of opening-vicinity conductor parts that are extended in the running direction along the end face portions at both sides of the opening portion and are arranged apart from an outer peripheral surface of the open pipe at positions not overlapping the opening portion in a plan view; and a first-portion circulating conductor part that is integrally provided at at least end portions, of the opening-vicinity conductor parts, on the side close to the squeeze roll unit in a longitudinal direction and is arranged apart from the outer peripheral surface of the open pipe so as to circulate around a portion, of the outer peripheral surface of the open pipe, excluding the opening portion is included, the electric resistance welded pipe welding method including: generating induced currents to flow along the end face portions at both sides of the opening portion by the paired opening-vicinity conductor parts; and generating an induced current to flow along the portion, of the outer peripheral surface of the open pipe, excluding the opening portion by the first-portion circulating conductor part.

In the electric resistance welded pipe welding method, the induction coil may further include a second-portion circulating conductor part that is integrally provided at end portions, of the opening-vicinity conductor parts, on the side far from the squeeze roll unit in the longitudinal direction and is arranged apart from the outer peripheral surface of the open pipe so as to circulate around the portion, of the outer peripheral surface of the open pipe, excluding the opening portion.

In the electric resistance welded pipe welding method, at the end portions, of the opening-vicinity conductor parts, on the side close to the squeeze roll unit in the longitudinal direction, the first-portion circulating conductor part may be provided in a plurality of layers.

In the electric resistance welded pipe welding method, a ferromagnet may be arranged in the opening portion on the upstream side in the running direction relative to the induction coil.

[Effect of the Invention]

According to the present invention, in the electric resistance welded pipe welding device that inductively heats the open pipe made by bending the running metal strip into a cylindrical shape in the middle and welding both the end face portions of the open pipe together by currents induced in the open pipe, it is possible to prevent an impeder burnout by reducing the magnetic flux density of the impeder in the same heating state as that of a conventional welding method. Further, in the present invention, having the opening-vicinity conductor parts makes it possible to keep the power supply connection conductor part connected to the power supply away from the welded portion, and thus it is possible to bring the induction coil closer to the squeeze rolls than ever before and improve the heating efficiency. Furthermore, in the present invention, the induction coil does not stride over the opening portion of the open pipe, so that it is possible to secure a space above the open pipe and install accessory equipment such as a shield or a measurement device in this space.

[Brief Description of the Drawings]

[FIG. 1] is a schematic plan view illustrating an electric resistance welded pipe welding device according to a prior art that uses an induction coil in which a closed circuit is formed so as to surround an outer peripheral surface of a metal strip bent into a cylindrical shape.

[FIG. 2] is a schematic side view of the electric resistance welded pipe welding device illustrated in FIG. 1.

[FIG. 3] is a schematic vertical cross-sectional view of the electric resistance welded pipe welding device illustrated in FIG. 1 and FIG. 2.

[FIG. 4] is a plan view schematically illustrating an electric resistance welded pipe welding device according to a first embodiment of the present invention.

[FIG. 5(a) and FIG.5(b)] are side views each schematically illustrating the electric resistance welded pipe welding device illustrated in FIG 4.

[FIG. 6(a) and FIG. 6(b)] are views schematically illustrating, of the electric resistance welded pipe welding device illustrated in FIG. 4 and FIG. 5(a) and FIG. 5(b), a transverse cross-sectional view of a first-portion circulating conductor part in FIG. 6(a) and a transverse cross-sectional view of opening-vicinity conductor parts in FIG. 6(b) respectively.

[FIG. 7] is a side view schematically illustrating a distribution of induced currents of the electric resistance welded pipe welding device explained in FIG. 4.

[FIG. 8] is a plan view schematically illustrating the distribution of induced currents of the electric resistance welded pipe welding device explained in FIG. 4.

[FIG. 9] is a side view schematically illustrating an arrangement of an induction coil and squeeze rolls of the electric resistance welded pipe welding device illustrated in FIG. 4 and FIG. 5(a) and FIG. 5(b).

[FIG. 10] is a side view schematically illustrating an electric resistance welded pipe welding device according to a second embodiment of the present invention.

[FIG. 11] is a view schematically illustrating a transverse cross-sectional view of a ferromagnet core portion of the electric resistance welded pipe welding device illustrated in FIG. 10.

[FIG. 12] is a side view schematically illustrating a distribution of induced currents of the electric resistance welded pipe welding device explained in FIG. 10.

[FIG. 13] is a plan view schematically illustrating the distribution of induced currents of the electric resistance welded pipe welding device explained in FIG. 10.

[FIG. 14] is a plan view schematically illustrating an electric resistance welded pipe welding device according to a third embodiment of the present invention.

[FIG. 15(a) and FIG. 15(b)] are side views each schematically illustrating the electric resistance welded pipe welding device illustrated in FIG. 14.

[FIG. 16(a) to FIG. 16(c)] are views schematically illustrating, of the electric resistance welded pipe welding device illustrated in FIG. 14 and FIG. 15(a) and FIG. 15(b), a transverse cross-sectional view of a first-portion circulating conductor part in FIG. 16(c), a transverse cross-sectional view of opening-vicinity conductor parts in FIG. 16(b), and a transverse cross-sectional view of a second-portion circulating conductor part in FIG. 16(a) respectively.

[FIG. 17] is a side view schematically illustrating a distribution of induced currents of the electric resistance welded pipe welding device explained in FIG. 14.

[FIG. 18] is a plan view schematically illustrating the distribution of induced currents of the electric resistance welded pipe welding device explained in FIG. 14.

[FIG. 19] is a side view schematically illustrating an electric resistance welded pipe welding device according to a fourth embodiment of the present invention.

[FIG. 20] is a side view schematically illustrating a distribution of induced currents of the electric resistance welded pipe welding device explained in FIG. 19.

[FIG. 21] is a plan view schematically illustrating the distribution of induced currents of the electric resistance welded pipe welding device explained in FIG. 19.

[FIG. 22] is a plan view schematically illustrating an electric resistance welded pipe welding device according to a fifth embodiment of the present invention.

[FIG. 23(a) and FIG. 23(b)] are side views each schematically illustrating the electric resistance welded pipe welding device illustrated in FIG. 22.

[FIG. 24(a) to FIG. 24(c)] are views schematically illustrating, of the electric resistance welded pipe welding device illustrated in FIG. 22 and FIG. 23(a) and FIG. 23(b), a transverse cross-sectional view of a first-portion circulating conductor part in FIG. 24(c), a transverse cross-sectional view of opening-vicinity conductor parts in FIG. 24(b), and a transverse cross-sectional view of a second-portion circulating conductor part in FIG. 24(a) respectively.

[FIG. 25] is a side view schematically illustrating a distribution of induced currents of the electric resistance welded pipe welding device explained in FIG. 22.
[FIG. 26] is a plan view schematically illustrating the distribution of induced currents of the electric resistance welded pipe welding device explained in FIG. 22.
[FIG. 27] is a plan view schematically illustrating an electric resistance welded pipe welding device according to a modified example of the fifth embodiment of the present invention.
[FIG. 28] is a side view schematically illustrating an electric resistance welded pipe welding device according to a sixth embodiment of the present invention.
[FIG. 29] is a side view schematically illustrating a distribution of induced currents of the electric resistance welded pipe welding device explained in FIG. 28.
[FIG. 30] is a plan view schematically illustrating the distribution of induced currents of the electric resistance welded pipe welding device explained in FIG. 28.

[Mode for Carrying out the Invention]

Hereinafter, there will be explained embodiments of the present invention with reference to the drawings. Incidentally, in this description and the drawings, the same reference numerals and symbols are added to components having substantially the same functional constitutions, and thereby their redundant explanations are omitted.

(Conventional electric resistance welded pipe welding device)

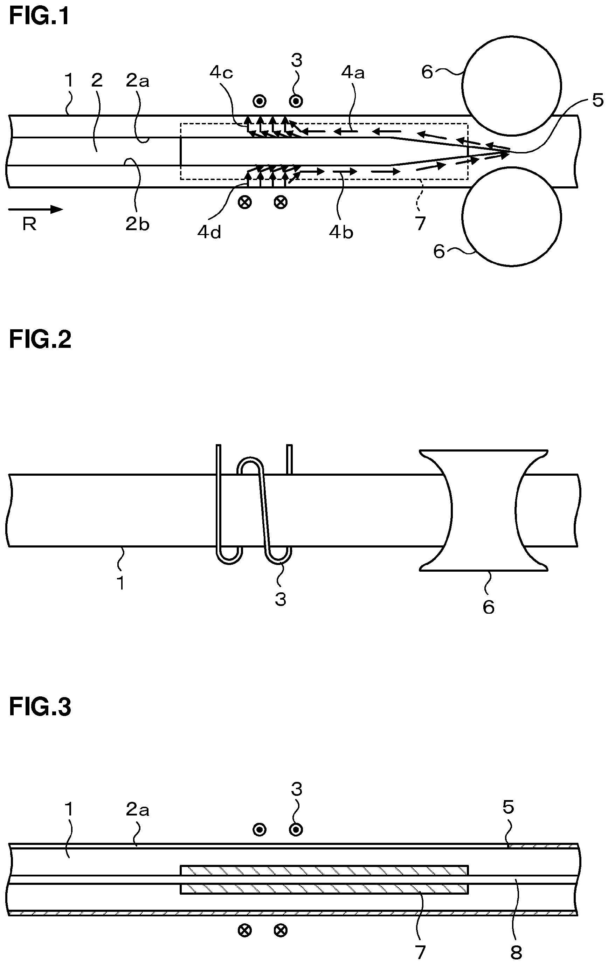

First, with reference to FIG. 1 to FIG. 3, such a conventional electric resistance welded pipe welding device as described in Patent Document 1 will be explained. FIG. 1 is a schematic plan view explaining an electric resistance welded pipe welding device that manufactures an electric resistance welded pipe by winding an induction coil around an outer periphery of an open pipe and performing high-frequency electric resistance welding by an induced current generated in the open pipe by a primary current applied to this induction coil, and FIG. 2 is a schematic side view of FIG. 1. Further, FIG. 3 is a schematic vertical cross-sectional view of the device illustrated in FIG. 1 and FIG. 2. Here, most of the current flowing through end portions of the open pipe flows through facing end face portions, but in order to simplify the explanation, FIG. 1 is illustrated as if the current flows through the upper surface side (outer peripheral surface side) of the end face portions of the open pipe for convenience (the same is applied hereinafter). The primary current flowing through the induction coil in this case and the induced current generated in the open pipe both are alternating currents opposite in direction to each other, but are illustrated by vectors each having a direction and a size of the current at a certain moment in the drawing for convenience (the same is applied hereinafter). Further, an impeder is normally housed in a resin case and is cooled by a cooling water flowing in the case. This impeder case prevents the impeder from being broken by a hit or the like when mounting. In the following explanation, the illustration of this impeder case is omitted because explanatory drawings become difficult to understand.

Generally, as for the electric resistance welded pipe, a running metal strip, which is slit to a width according to the diameter of a pipe to be formed, is formed into a cylindrical open pipe with both its end face portions in the width direction facing while being bent by rolls. Thereafter, by the induced current generated by the induction coil, the induced current is made to flow through the open pipe to heat and melt the end face portions of the open pipe (the end face portions facing an opening portion). Thereafter, on the downstream side of the process, both the facing end face portions of the open pipe are pressed by squeeze rolls to let oxides and melted soft portions that are liable to defects go to the outside of front and rear surfaces, and the welding is completed. Thereafter, discharged bead portions are cut and removed, and then the electric resistance welded pipe having a defect-less and sound welded portion is obtained. Here, the wording of "downstream" explained in this description means the downstream side in the running direction of the metal strip or the open pipe, and hereinafter, the wording of "upstream" and the wording of "downstream" indicate the "upstream" side and the "downstream" side in the running direction of the metal strip or the open pipe respectively.

As illustrated in FIG. 1 to FIG. 3, a metal strip 1 being a material to be welded is bent by not-illustrated rolls from a flat-plate state during running to be formed into a shape of a cylindrical open pipe 1 with both end face portions 2a and 2b facing, and then the material is passed so that both the end face portions 2a, 2b are pressed by squeeze rolls 6 to be in contact at a joint portion (squeeze roll unit, welded portion) 5. On the upstream side of the squeeze rolls 6, such an induction coil (solenoid coil) 3 as illustrated in FIG. 1 to FIG. 3 is provided in order to melt and join both the facing end face portions 2a, 2b at the joint portion 5, and a high-frequency current (that is the order of 100 kHz normally) is applied to this induction coil 3, and thereby induced currents 4c, 4d are generated in a surface layer of the cylindrical open pipe 1 that is immediately below the induction coil. The induced current circulates around the outer peripheral surface of the open pipe 1 along the induction coil 3 circulating around the open pipe 1, but in the middle, due to the existence of an opening portion 2 of the open pipe 1, the induced current fails to flow immediately below the induction coil in this portion, resulting in that the induced current is roughly divided and induced currents in two directions tend to flow. That is, as the primary current of the induction coil 3 and the induced current of the open pipe 1 are illustrated in directions at a certain moment respectively in FIG. 1 as a matter of convenience, the current to flow in the first direction is currents 4a, 4b passing through the joint portion 5 along the end face portions 2a, 2b of the open pipe 1 and the current to flow in the second direction is currents 4c, 4d circulating around the outer peripheral surface from the opening portion of the open pipe 1. Out of these currents, the currents 4a, 4b passing through the joint portion 5 flow through the surface layers of both the end face portions 2a, 2b facing the opening portion 2 of the open pipe 1 by the proximity effect by the high-frequency current, to heat and melt these places, and the joint portion 5 is pressure-welded by the squeeze rolls 6 finally, leading to completion of the welding.

Incidentally, in FIG. 1, the illustration of current to tend to circulate around an inner peripheral surface of the open pipe 1 is omitted. This is because a ferromagnet core made of ferrite and the like, which is called an impeder 7, is arranged inside the open pipe 1 to increase the impedance of the inner peripheral surface of the open pipe 1, thereby making it possible to prevent the current from flowing around the inner peripheral surface. Alternatively, this is because in the case where the diameter of the electric resistance welded pipe to be manufactured is large as compared to the length to and from the joint portion 5 and the inner periphery of the open pipe 1 is sufficiently long, the impedance of the inner peripheral surface increases sufficiently without arrangement of the impeder 7 to suppress the current to circulate around the inner peripheral surface in some cases.

Further, on the downstream side of the joint portion 5 inside the open pipe 1, cutters (not illustrated) for cutting beads on the inner surface after welding (cutting beads on the inner surface is also called inner-surface bead cutting) are arranged. Incidentally, the cutters are supported by a rod 8 arranged at a substantially central portion of the open pipe 1. Further, in the middle of this rod 8, the impeder 7 is arranged. The rod 8 is arranged so as to penetrate a substantially central portion of, for example, the substantially column-shaped impeder 7.

(Background of the present invention)

Here, the induction coil 3 in the conventional electric resistance welded pipe welding device, as described above, circulates around the outer peripheral surface of the open pipe 1 and is arranged so that the conductor part of the induction coil 3 strides over the opening portion 2 of the open pipe 1. In such a case, there has been a problem that at the time of welding when manufacturing the electric resistance welded pipe, a strong magnetic field is generated also inside the open pipe 1 and thereby the impeder 7 is burnt out or the rod 8 coupling the cutters for inner-surface bead cutting (not illustrated) beaks in some cases, thereby failing to perform a long and stable operation.

As a result of examination by the present inventor, he/she found out that the reason why the impeder 7 burns out is because (1) a magnetic flux with a high magnetic flux density generated by the induction coil 3 arranged so as to stride over the opening portion 2 of the open pipe 1 directly enters the impeder 7 with high magnetic permeability and because (2) a magnetic flux generated by the induced currents (welding currents) flowing through the end face portions 2a, 2b of the opening portion 2 enters the impeder 7 and thereby the impeder 7 causes magnetic flux saturation to burn out. In the case where the electric resistance welded pipe to be manufactured is a small-diameter pipe, for example, a pipe whose inside diameter is about 100 mm or less, in particular, a thick-walled pipe, for example, a pipe whose wall thickness is greater than 6 mm, the space between the induction coil and the impeder 7 becomes narrow, and thereby the impeder 7 is exposed to the strong magnetic field, and further the distance between each of the end face portions 2a, 2b of the opening portion 2 of the open pipe 1 and the impeder 7 is short and large currents flow near the impeder 7, and thereby the magnetic flux density of the impeder 7 increases, resulting in a situation where the impeder 7 generates heat to lose magnetism and is damaged hard.

Further, when the impeder 7 burns out, the induced current does flow through the end face portions 2a, 2b of the opening portion 2 but circulates around the inner peripheral surface of the open pipe 1, thus failing to secure current necessary for welding of the end face portions 2a, 2b, resulting in that heat generation amounts in the end face portions 2a, 2b decrease to fail to perform welding in some cases. Further, there is also a case that the rod 8 is heated by the induced current circulating around the inner peripheral surface of the open pipe 1 to be broken. Further, when the cooling water for cooling the impeder 7, which flows inside the impeder case, is heated too much by the generated heat of the impeder 7, the resin-made impeder case (not illustrated) in which the impeder 7 is housed fails to cool the impeder 7 because the impeder case is easily deformed by radiation heats from the heat-generated end face portions 2a, 2b that are located above the impeder case to make holes and the cooling water spouts out from the holes, or the like, resulting in that the operation becomes impossible in some cases.

Then, the present inventor examined a method to reduce the magnetic flux density of the impeder 7 by avoiding the magnetic flux to directly enter the impeder 7 from the induction coil and reducing the peak and the average intensity of the induced currents flowing through the end face portions 2a, 2b of the opening portion 2 of the open pipe 1.

As a result, the present inventor learned that a closed circuit is formed without the induction coil striding over the opening portion 2 of the open pipe 1 so as to prevent the magnetic flux generated from the induction coil from directly entering the impeder 7 with high magnetic permeability through the opening portion 2 of the open pipe 1, thereby making it possible to reduce the magnetic flux density of the impeder 7. Concretely, in the present invention, conductor parts of the induction coil (opening-vicinity conductor parts) along the opening portion 2 of the open pipe 1 are arranged in pairs closely to both the end face portions 2a, 2b of the open pipe 1 respectively and at the same time, at at least respective end portions, of the opening-vicinity conductor parts, on the joint portion 5 side, a portion circulating conductor part of the induction coil circulating around the portion, of the open pipe 1, excluding the opening portion 2 is arranged, and the opening-vicinity conductor parts and the portion circulating conductor part are connected so as to form the closed circuit, and the other respective end portions of the opening-vicinity conductor parts are connected to a high-frequency power supply by power supply connection conductor parts on the upstream side of the open pipe 1. This makes it possible to avoid the magnetic flux that is generated in the induction coil and directly enters the impeder 7 and at the same time, increasing the heating efficiency makes it possible to reduce the peak and the average intensity of the induced currents flowing through the end face portions 2a, 2b of the opening portion 2 of the open pipe 1. Hereinafter, there will be described preferred embodiments of the present invention completed by the above-described findings.

Incidentally, since in the vicinity of the squeeze rolls 6, various pieces of equipment such as leads from the power supply, for example, are provided above the open pipe 1, in the case where such an induction coil 3 according to the prior art circulates around the open pipe 1, there has been a limit to bringing the induction coil 3 itself close to the squeeze rolls 6 as a matter of course. In such a case, the position of the open pipe 1 where the induced current is generated has to be located at a position a certain distance away from the joint portion, resulting in that the heating efficiency becomes poor. Regarding this point, using the above-described induction coil including the opening-vicinity conductor parts and the portion circulating conductor part like the present invention makes it possible to secure a large space above the open pipe 1 as compared to the prior art, and thus it is possible to bring the induction coil close to the squeeze rolls 6 according to the space, further to install accessory equipment such as a shield or a measurement device in the space above the open pipe, and furthermore to improve the heating efficiency.

(First embodiment)

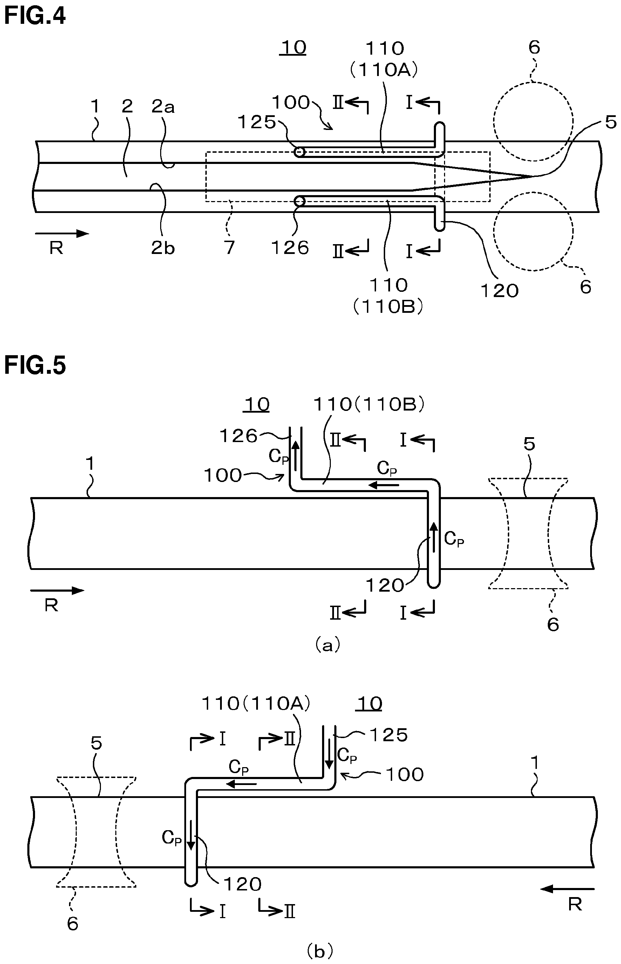

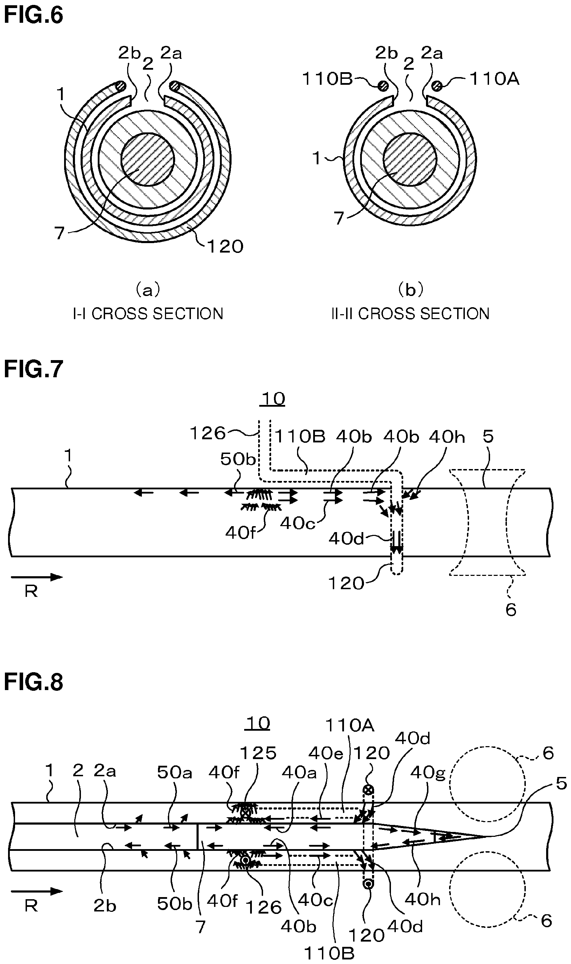

First, with reference to FIG. 4 to FIG. 6(a) and FIG. 6(b), there will be explained a constitution of an electric resistance welded pipe welding device 10 according to a first embodiment of the present invention. Incidentally, in the drawings, an impeder is illustrated as it is, but the impeder is actually housed in an impeder case. However, the drawings become difficult to understand when the impeder case is illustrated in a narrow place, so that the impeder case is not illustrated also here. FIG. 4 is a plan view schematically illustrating the electric resistance welded pipe welding device 10 according to this embodiment, FIG. 5(a) FIG. 5(b) each are a side view of the electric resistance welded pipe welding device 10 illustrated in FIG. 4, FIG. 5(a) is a right side view viewed from the right side in the running direction, and FIG. 5(b) is a left side view viewed from the left side in the running direction. FIG. 6(a) and FIG. 6(b) are transverse cross-sectional views of a first-portion circulating conductor part and opening-vicinity conductor parts of the electric resistance welded pipe welding device 10 illustrated in FIG. 4 and FIG. 5(a) FIG. 5(b), FIG. 6(a) is a I-I cross-sectional view taken along the I-I line in FIG. 4 and FIG. 5(a) FIG. 5(b), and FIG. 6(b) is a II-II cross-sectional view taken along the II-II line in FIG. 4 and FIG. 5(a) FIG. 5(b).

As illustrated in FIG. 4 to FIG. 6(a) and FIG. 6(b), in the electric resistance welded pipe welding device 10 according to this embodiment, a metal strip 1 running in a running direction R is bent into a cylindrical shape by not-illustrated rolls so that both end face portions (end face portions) 2a, 2b in the width direction of the metal strip 1 face with a gap left therebetween to be formed into an open pipe 1, and then a high-frequency current is applied to an induction coil 100 as an induction heating means that is arranged in the vicinity of an opening portion 2 of the open pipe 1, and generated induced currents melt both the end face portions 2a, 2b. That is, the electric resistance welded pipe welding device 10 causes the induction coil 100 to induce the high-frequency current being the induced current in the vicinity of the opening portion 2 of the open pipe 1. Normally, the induced current is generated immediately below the induction coil to flow, but in the case where high-frequency currents having different polarities flow nearby, the high-frequency currents tend to come close to each other so as to reduce inductance, namely, so that the space surrounded by these currents narrows. In the case of this embodiment, both the end face portions 2a, 2b of the open pipe 1 are closely positioned face to face, so that the space surrounded by both the end face portions 2a, 2b results in the space surrounded by the generated induced currents having different polarities, the induced current generated outside the opening portion 2 is divided to flow through both the end face portions 2a, 2b, and the currents heat-melt both the end face portions 2a, 2b. While the gap of the opening portion 2 is being narrowed gradually by squeeze rolls 6 pressing both sides of the open pipe 1, both the end face portions 2a, 2b come into contact with each other to be welded. More concretely, the electric resistance welded pipe welding device 10 according to this embodiment is a device for manufacturing an electric resistance welded pipe, in which of the open pipe 1 having the opening portion 2 extending in the running direction, the end face portions facing the opening portion 2 each other from both sides and made of a pipe material (in other words, the end face portions facing across the opening portion 2) 2a, 2b are both melted by the induced currents generated by the induction heating means, and at the same time, the end face portions 2a, 2b are brought into contact with each other at a joint portion 5 to be welded while gradually narrowing the gap of the opening portion 2. This electric resistance welded pipe welding device 10 includes, as the induction heating means, the induction coil 100 composed of a pair of opening-vicinity conductor parts 110A and 110B (hereinafter, A means one end face portion 2a side, B means the other end face portion 2b side, and the paired opening-vicinity conductor parts are sometimes described as "opening-vicinity conductor parts 110" collectively) and a first-portion circulating conductor part 120.

The paired opening-vicinity conductor parts 110A and 110B are, as illustrated in FIG. 4, FIG. 5(a) FIG. 5(b), and FIG. 6(b), are conductors extended in the running direction along the end face portions 2a, 2b at both sides of the opening portion 2 respectively, and are each arranged at the position not overlapping the opening portion 2 in a plan view apart from an outer peripheral surface of the open pipe 1. Incidentally, the opening-vicinity conductor parts 110A and 110B may be arranged at the positions not overlapping the opening portion 2 in a plan view, namely, at the positions where end portions, of the opening-vicinity conductor parts 110A and 110B, on the side close to the opening portion 2 and the end face portions 2a, 2b of the opening portion 2 are almost in contact in a plan view. However, the opening-vicinity conductor parts 110A and 110B are preferably arranged at the positions where the opening-vicinity conductor parts 110A and 110B and an impeder 7 are not seen via the opening portion 2.

The first-portion circulating conductor part 120 is, as illustrated in FIG. 4, FIG. 5(a) FIG. 5(b), and FIG. 6(a), integrally provided at at least end portions, of the opening-vicinity conductor parts 110, on the side close to the joint portion 5 in the longitudinal direction, and is arranged apart from the outer peripheral surface of the open pipe 1 so as to circulate around the portion, of the outer peripheral surface of the open pipe 1, excluding the opening portion 2. Incidentally, end portions, of the opening-vicinity conductor parts 110, on the side far from the joint portion 5 in the longitudinal direction are connected to the not-illustrated high-frequency power supply. In more detail, in the induction coil 100 according to this embodiment illustrated in FIG. 4 to FIG. 6(a) and FIG. 6(b) as an example, the end portions, of the opening-vicinity conductor parts 110, on the side far from the joint portion 5 in the longitudinal direction are connected to the not-illustrated high-frequency power supply by power supply connection conductor parts 125, 126.

The induction coil 100 used in the present invention is made of a pipe, a wire material, a plate, or the like being a good conductor of copper or the like and is used as a general term of induction coils forming closed circuits on the open pipe 1, and its material and the like are not limited in particular. Further, the shape of the induction coil 100 is also not limited in particular providing that the induction coil 100 is composed of the above-described opening-vicinity conductor parts 110 and first-portion circulating conductor part 120. In this embodiment, for example, as illustrated in FIG. 4 and FIG. 5(a) FIG 5(b) as an example, the opening-vicinity conductor parts 110 each have a linear shape, but may be one having a curved portion providing that the opening-vicinity conductor parts 110 are extended in the running direction along the end face portions 2a, 2b at both sides of the opening portion 2 respectively and are arranged at the positions not overlapping the opening portion 2 in a plan view apart from the outer peripheral surface of the open pipe 1. Further, the first-portion circulating conductor part 120 circulates around the portion, of the outer peripheral surface of the open pipe 1, excluding the opening portion 2, and is illustrated as an example in such a shape as to draw a circular layer (a circular coil), but may have such a shape as to draw a rectangular layer, for example, (be a rectangular coil). Further, the number of layers of the above is set to one in this embodiment. Here, in this description, the reference to the number of circulations of the induction coil being "one" does not mean that in a plan view, one end portion and the other end portion of the induction coil in the circulating direction coincide or overlap, to thereby make a complete circle of the outer peripheral surface of the open pipe 1, but means that like the first-portion circulating conductor part 120 and the like illustrated in FIG. 4 to FIG. 6(a) and FIG. 6(b), the other end portion terminates before one end portion and a complete circle is not made.

As illustrated in FIG. 5(a) FIG. 5(b), the electric resistance welded pipe welding device 10 according to this embodiment passes a primary current $C_P$ through the induction coil 100 (the direction of the primary current $C_P$ illustrated in FIG. 5(a) FIG. 5(b) is illustrated as a direction of an alternating current at a certain moment as a matter of convenience, and the case where the current alternates to flow in an opposite direction is of course also included). On this occasion, the high-frequency primary current flows through the induction coil 100 to generate a magnetic flux, and thereby in the open pipe 1, such a distribution of induced currents 40a, 40b, 40c, 40d, 40e, 40f, 40g, and 40h as illustrated by arrows in FIG. 7 and FIG. 8 (alternating induced currents taken at a certain moment) is generated. More details will be described as follows. Incidentally, FIG. 7 illustrates, out of the distribution of induced currents illustrated in FIG. 8, only the distribution of induced currents of the right side surface in the running direction, in which the illustration of the distribution of induced currents of the left side surface in the running direction is omitted. Further, the induced current 40f illustrated in FIG. 8 finally circulates around the periphery of the open pipe 1, but becomes extremely small enough to fail to be illustrated as a vector length because unlike the induced current 40d immediately below the first-portion circulating conductor part 120, a current passing region is dispersed widely in the longitudinal direction, resulting in that the induced current 40f after dispersion is not illustrated concretely in FIG. 7.

As illustrated in FIG. 5(b), when the alternating high-frequency current is taken at a certain moment, the primary current $C_P$ flowing through the induction coil 100 flows downward from above in FIG. 5(b) through the power supply connection conductor part 125 connected to the not-illustrated high-frequency power supply and flows in the same direction as the running direction (from right to left in FIG. 5(b)) through the opening-vicinity conductor part 110A. Then, the current flowing through the induction coil 100 flows so as to circulate around (almost circle) the periphery of the open pipe 1 through the first-portion circulating conductor part 120, and then, as illustrated in FIG. 5(a) illustrating the same taken moment as in FIG. 5(b), flows in the direction opposite to the running direction (from right to left in FIG. 5(a)) through the opening-vicinity conductor part 110B. Further, the current flowing through the induction coil 100 flows upward from below in FIG. 5(a) through the power supply connection conductor part 126 connected to the above-described high-frequency power supply to return to the high-frequency power supply.

When the primary current flows to the induction coil 100 in the above-described path, the induced current flowing around the outer peripheral surface of the open pipe 1 in a direction opposite to the primary current at the same moment is generated. Concretely, as illustrated in FIG. 7 and FIG. 8 each illustrating the same taken moment as in FIG. 5(a) FIG. 5(b), by the primary current $C_P$ flowing through the induction coil 100, in the vicinity of the opening-vicinity conductor part 110B, the current is divided into the induced current 40c to flow through the outer surface of the open pipe 1 and the induced current 40b to flow through the end face portion of the open pipe 1 to generate the induced currents, in the vicinity of the first-portion circulating conductor part 120, the induced current 40d to flow through the outer surface of the open pipe 1 is generated, and in the vicinity of the opening-vicinity conductor part 110A, the current is divided into the induced current 40e to flow through the outer surface of the open pipe 1 and the induced current 40a to flow through the end face portion of the open pipe 1 to generate the induced currents, and the induced currents 40f flow so as to join these induced currents continuously with the vicinity of the end portion on the upstream side and the vicinity of the end portion on the upstream side of the opening-vicinity conductor parts 110A and 110B set to the starting point and the end point respectively, and a main current loop (closed circuit) 40b + 40c, 40d, 40a + 40e, 40f is formed. Further, with the vicinity of a coupling portion of the end portion, of the opening-vicinity conductor part 110A, on the downstream side and the first-portion circulating conductor part 120 and the vicinity of a coupling portion of the end portion, of the opening-vicinity conductor part 110B, on the downstream side and the first-portion circulating conductor part 120 set to the starting point and the end point respectively, a current loop of the induced currents 40g, 40h separately flowing through the end face portions on the joint portion 5 side from this main current loop is formed. Further, with the vicinity of the end portion on the upstream side and the vicinity of the end portion on the upstream side of the opening-vicinity conductor parts 110A and 110B set to the starting point and the end point respectively, a current loop is formed by induced currents 50a, 50b flowing upstream separately from the above-described main current loop. Among them, by the induced currents 40a, 40b flowing through the end face portions and the induced currents 40g, 40h flowing through both the end face portions on the welded portion side, both the end face portions 2a, 2b are heated and melted to be welded. On this occasion, at the position on the joint portion 5 side, the impedance decreases because the width of the opening portion 2 of the open pipe 1 narrows, so that an effect that the temperature is likely to rise high due to current concentration caused by a proximity effect also works for the welding. Further, the opening-vicinity conductor parts 110 are arranged along both the end face portions 2a, 2b of the opening portion 2, and thus the induced currents tend to flow near the opening-vicinity conductor parts 110 and flow through also both the end face portions 2a, 2b efficiently in cooperation with the proximity effect of both the end face portions 2a, 2b, resulting in that current amounts of the induced currents 40a, 40b increase and the joint portion 5 can be heated efficiently.

In this embodiment, the induction coil 100 having the above-described constitution is used, so that the closed circuit composed of the induced currents 40b, 40d, 40a, and 40f and the closed circuit composed of the induced currents 40c, 40d, 40e, and 40f are formed without striding over the opening portion 2 of the open pipe 1. As a result, it is possible to avoid the magnetic flux to directly enter the impeder 7 from the induction coil 100, and at the same time, increasing the heating efficiency makes it possible to reduce the peak and the average intensity of the induced currents flowing through the end face portions 2a, 2b of the opening portion 2 of the open pipe 1. As a result, it is possible to prevent damage of the impeder 7, and such an effect becomes useful in particular when manufacturing a small-diameter pipe, for example, a pipe whose inside diameter is about 100 mm or less, in particular, a thick-walled pipe, for example, a pipe whose wall thickness is greater than 6 mm.

Further, the induction coil 100 in this embodiment does not circulate around the open pipe like the conventional induction coil described in Patent Document 1 and has the opening-vicinity conductor parts 110, thereby making it possible to distance the power supply connection conductor parts 125, 126 from the joint portion 5, resulting in that it is possible to secure a space above the open pipe 1 and further it is also possible to bring the induction coil 100 itself close to the squeeze rolls 6. Accordingly, it becomes possible to install accessory equipment such as a shield or a measurement device in the space above the open pipe 1. Further, the induction coil 100 is brought close to the squeeze rolls 6, thereby making it also possible to improve the heating efficiency when manufacturing the electric resistance welded pipe.

Further, the conventional preheating coil described in Patent Document 3 is connected to a power supply for preheating whose frequency is about 1 to 20 kHz, and further between the preheating coil and the joint portion, the contactor (contact chip) connected to a power supply for welding whose frequency is about 100 to 400 kHz, which is different from the power supply for preheating, is provided. Accordingly, it is impossible to bring this preheating coil close to the squeeze rolls. In contrast to this, to the induction coil 100 in this embodiment, the high-frequency power supply is connected via the power supply connection conductor part 126 and another power supply is not provided between the induction coil 100 and the joint portion 5. Therefore, it is possible to bring the induction coil 100 close to the squeeze rolls 6.

Further, the device described in Patent Document 3 includes two power supplies: the power supply connected to the preheating coil; and the power supply connected to the contactor. In such a case, they are sometimes inductively coupled, and in this case, a load becomes unstable and matching does not occur to make them impossible to oscillate, resulting in that there is a risk that the current no longer flows. As a result, it is impossible to heat the open pipe, thus failing to appropriately manufacture the electric resistance welded pipe in some cases.

Incidentally, the electric resistance welded pipe welding device 10 in this embodiment is not limited to the small-diameter pipe, and is applicable also to an intermediate-diameter pipe. The intermediate-diameter pipe has an inside diameter of about 100 to 700 mm, for example.

In the case of electric resistance welding of the intermediate-diameter pipe, generally, as compared to the case of the small-diameter pipe, in addition to an increase in applied amount of power for welding, there is a concern that a strong magnetic field generated in the induction coil 3 directly affects the impeder 7 because the opening portion 2 of the open pipe 1 also widens, but using the induction coil 100 having the constitution in this embodiment enables stable production by minimizing the effect. That is, in general, electric resistance welded pipe welding, the magnetic flux from the strong magnetic field generated in the induction coil 3 selectively penetrates the impeder 7 having high magnetic permeability through the opening portion 2 because nothing obstructs the opening portion 2 of the open pipe 1. Therefore, in the case where the impeder 7 does not have a sufficient cross-sectional area to prevent magnetic flux saturation, the impeder 7 is magnetically saturated to generate heat, resulting in that it is impossible to suppress damage of the impeder 7 and the effect of suppressing that the current circulates around the inner peripheral surface of the open pipe 1 is also lost. In contrast to this, in the induction coil 100 in this embodiment, the magnetic flux generated in the induction coil 100 does not enter through the opening portion 2, and thus even with the increase in power, it becomes possible to prevent damage of the impeder 7 and stable manufacture is enabled.

Further, in the case of the intermediate-diameter pipe, generally, the power required for welding increases more than the small-diameter pipe, and thus it is necessary to increase also the value of current to be applied and the heating efficiency becomes inferior to the small-diameter pipe. In contrast to this, in this embodiment, it is possible to bring the induction coil 100 close to the squeeze rolls 6, to thus enable improvement in the heating efficiency. Accordingly, such an effect becomes useful in particular when manufacturing the intermediate-diameter pipe.

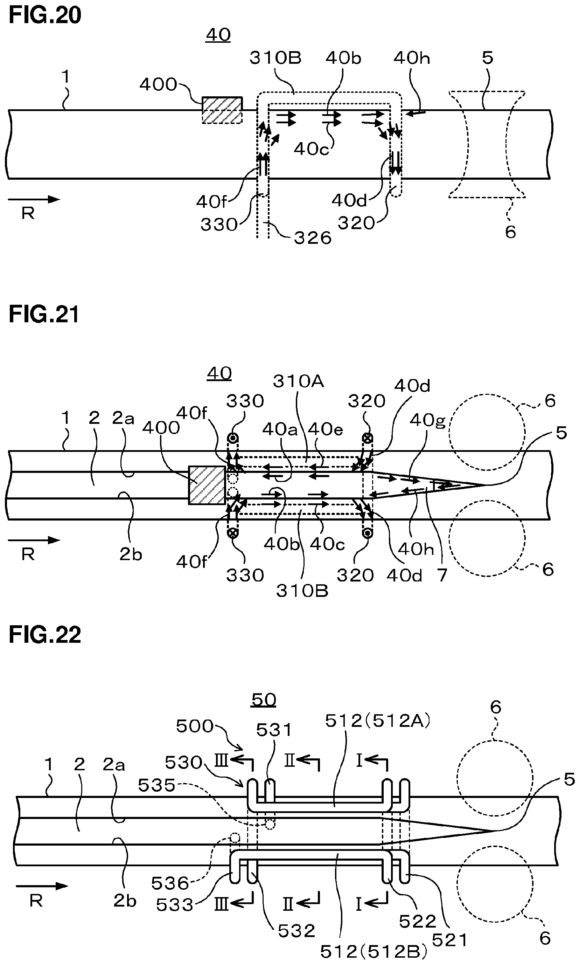

Incidentally, in the case of the intermediate-diameter pipe, generally, the power required for welding increases more than the small-diameter pipe, and thus it is necessary to increase also the value of current to be applied, but as illustrated in FIG. 22 to FIG. 24(a) to FIG. 24(c) of a later-described fifth embodiment, it is also possible that first-portion circulating conductor parts 520 (521, 522) are provided in a plurality of layers to thereby increase the intensity of a magnetic field and generate the same magnetic field intensity by a small current.

Next, there will be explained a preferred arrangement of the induction coil 100 in this embodiment. The efficiency is better when the distance between the inner peripheral surface of the induction coil 100 and the outer peripheral surface of the open pipe 1 is as short as possible, but spacing of 5 to 10 mm is preferably provided therebetween in order to avoid contact between the induction coil 100 and the open pipe 1.

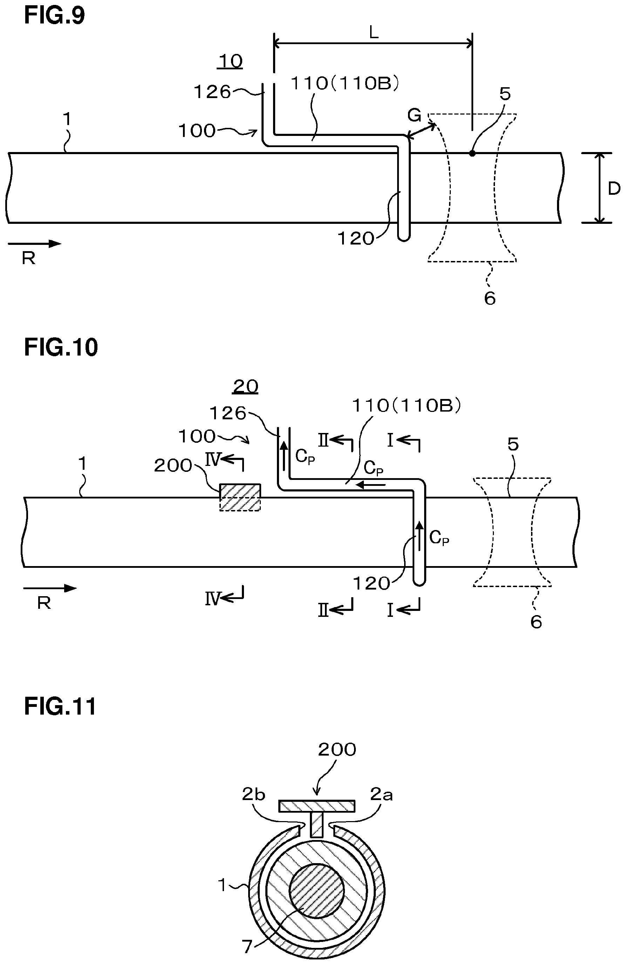

Further, in this embodiment, as illustrated in FIG. 9, the shortest distance G between the first-portion circulating conductor part 120 and the squeeze rolls 6 is preferred to be 20 mm or more (G ≥ 20 mm). Making this shortest distance G fall within the above-described range suppresses the squeeze rolls 6 to be inductively heated, resulting in that welding can be performed effectively. Incidentally, in the example of FIG. 9, the shortest distance G between the first-portion circulating conductor part 120 and the squeeze rolls 6 is diagonal in a side view, but in the case where the diameter of the squeeze rolls 6 (vertical length in a side view) is smaller as compared to the diameter of the first-portion circulating conductor part 120, for example, the shortest distance G becomes horizontal The direction of the shortest distance G is determined according to the relationship between the diameter of the first-portion circulating conductor part 120 and the curvature of a curved portion of the squeeze rolls 6 in a side view.

Further, in this embodiment, a distance L between the end portion, of the opening-vicinity conductor part 110, on the side far from the joint portion 5 in the longitudinal direction and the joint portion 5 preferably satisfies Expression (1) below as one example in many cases. The distance L, which indicates the distance between the power supply connection conductor parts 125, 126 and the joint portion 5, is designed to satisfy Expression (1) below, thereby making it possible to improve the heating efficiency in a state where a sufficient heating amount in the joint portion 5 is obtained. (1) Expression is an expression indicating that heating is possible efficiently providing that the distance 2L is about three times as long as a distance $\pi D$ of the inner periphery relative to a reciprocating distance 2L between the joint portion 5 and the coil experientially, and the coefficient of 3 varies depending on each device.

$$2L \leq 3\pi D \cdots (1)$$

where L is the distance between the end portion, of the opening-vicinity conductor part 110, on the side far from the joint portion 5 in the longitudinal direction and the joint portion 5, and D is the inside diameter of the open pipe 1.

Here, in this embodiment, as illustrated in FIG. 7 and FIG. 8 each illustrating the alternating high-frequency current taken at a certain moment, regarding the induced currents in the vicinities of the end portions on the upstream side of the opening-vicinity conductor parts 110 (110A, 110B), in addition to the induced currents 40b, 40c flowing in the direction toward the joint portion 5 and the induced currents 40a, 40e flowing in the direction from the joint portion 5, some currents are divided to flow upstream of the induction coil 100. That is, as the induced currents, other than the induced currents 40a, 40b, 40c, 40d, 40e, 40f, 40g, and 40h, as described above, an induced current 50b to flow upstream from the vicinity of the end portion on the upstream side of the opening-vicinity conductor part 110B of the induction coil 100 and an induced current 50a to return to the vicinity of the end portion on the upstream side of the opening-vicinity conductor part 110A of the induction coil 100 from the upstream side are also generated. These induced currents 50a, 50b form a closed circuit at the outer surface of the pipe on the upstream side of the induction coil 100 and are consumed in heat generation that does not contribute to welding at the outer surface of the pipe where this closed circuit is formed. These induced currents 50a, 50b hardly contribute to heating of the joint portion 5, to thus be consumed as part of useless power of the power supplied to the induction coil 100.

Thus, in an electric resistance welded pipe welding device 20 according to a second embodiment of the present invention to be described below, in order to inhibit the induced currents 50a, 50b from flowing upstream of the induction coil 100, a ferromagnet 200 is arranged between both the end face portions 2a, 2b of the opening portion 2 of the open pipe 1 on the upstream side of the induction coil 100 in the running direction. Hereinafter, the electric resistance welded pipe welding device 20 according to the second embodiment of the present invention will be described.

(Second embodiment)

Next, there will be explained a constitution of the electric resistance welded pipe welding device 20 according to the second embodiment of the present invention with reference to FIG. 10 and FIG. 11. FIG. 10 is a side view schematically illustrating the electric resistance welded pipe welding device 20 according to this embodiment (right side view viewed from the right side in the running direction), and FIG. 11 is a transverse cross-sectional view schematically illustrating the electric resistance welded pipe welding device 20 illustrated in FIG. 10 and is a IV-IV cross-sectional view of a ferromagnet core portion taken along the IV-IV line in FIG. 10.

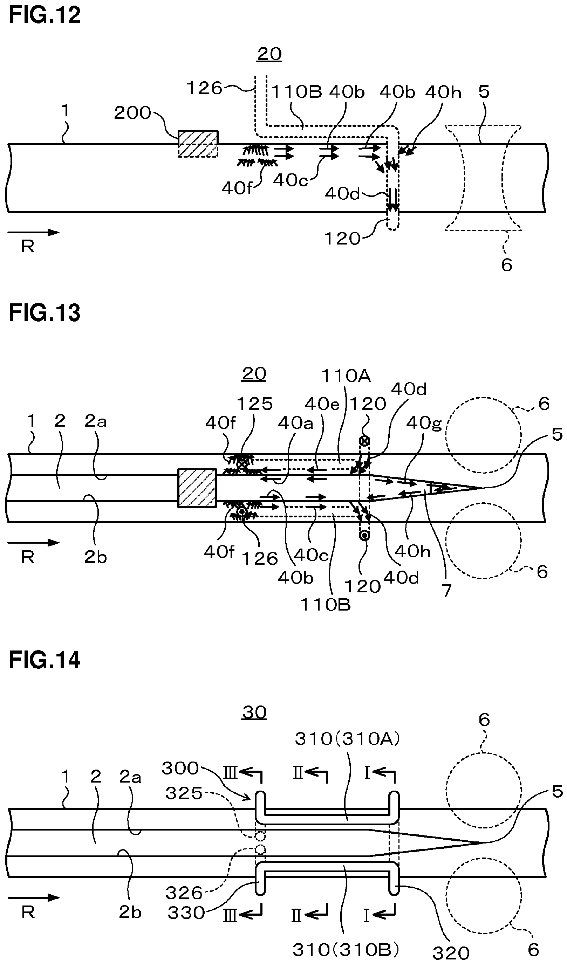

As illustrated in FIG. 10 and FIG. 11, the electric resistance welded pipe welding device 20 according to this embodiment further includes the ferromagnet 200 arranged in the opening portion 2 on the upstream side in the running direction relative to the induction coil 100 in addition to the same constitution as that of the above-described electric resistance welded pipe welding device 10 according to the first embodiment. When a current flows, this ferromagnet 200 works so as to inhibit the current and inhibits the current flowing upstream of the induction coil 100 due to having high impedance. Concretely, as illustrated in FIG. 12, the ferromagnet (magnetic material core) 200 is arranged in an expected flow path port of the induced currents 50a, 50b (see FIG. 7 and FIG. 8) that tend to flow upstream of the induction coil 100, and therefore, when the induced currents 50a, 50b tend to flow to the open pipe 1 facing the ferromagnet 200, the ferromagnet 200 works so as to inhibit the induced currents 50a, 50b, so that it is possible to inhibit the induced currents 50a, 50b that tend to flow upstream of the induction coil 100. As a result, the distribution of induced currents comes close to such a distribution of induced currents as illustrated in FIG. 13. Therefore, it is possible to let a large amount of induced current generated on the outer peripheral surface of the open pipe 1 flow to the joint portion 5 side, and it becomes possible to increase the density of the currents flowing in the joint portion 5 and increase the heat generation amount.

Further, the examination by the present inventor reveals that a large amount of induced current flows through the end face portions 2a, 2b of the open pipe 1, particularly, upper and lower end portions in a pipe cross section (corner portions), and more induced current flows through the upper corner portion than through the lower corner portion. Therefore, preferably, the ferromagnet 200 is installed at a position corresponding to the opening portion 2 between both the end face portions 2a, 2b of the facing open pipe 1 so as to be loosely inserted between both these end face portions 2a, 2b and at the same time, has a shape to cover one or both of the upper corner portions and the lower corner portions of both the end face portions 2a, 2b of the facing open pipe 1 when the ferromagnet 200 is seen in a cross section vertical to the running direction of the open pipe 1.

The ferromagnet 200 can be designed to have such a T shape as illustrated in FIG. 11, for example. As described above, since a large amount of induced current flows through the end face portions 2a, 2b of the open pipe 1, particularly, the upper and lower end portions in a pipe cross section (corner portions) and more induced current flows through the upper corner portion than through the lower corner portion, the ferromagnet 200 is formed in such a shape as to cover the upper corner portions through which more induced current flows, thereby making it possible to effectively inhibit the induced currents. Further, in order to most increase the effect of inhibiting (suppressing) the induced currents, the ferromagnet 200 is preferably formed in a shape such that the letter of H is turned sideways, though its illustration is omitted. This makes it possible to inhibit not only the induced currents flowing through the end face portions 2a, 2b but also the induced currents flowing through the upper corner portions and the lower corner portions. Further, as the shape of the ferromagnet 200, various shapes such as a curved shape such that the letter of H is turned sideways, an I shape, an inverted T shape, and so on are considered (see, for example. Fig. 8 to Fig. 12, their explanations, and so on of International Publication No. 2011/034119).

As the material of the ferromagnet 200, a good magnetic material having high relative permeability and low conductivity such as ferrite or an electromagnetic steel sheet may be used.

Further, although the position to install the ferromagnet 200 may be any portion further upstream than the induction coil 100, a position closer to the induction coil 100 is more effective in order to inhibit the origin of the induced current that tends to flow upstream. However, if the ferromagnet 200 is too close to the induction coil 100, the density of the magnetic flux becomes high and the ferromagnet 200 easily generates heat, and therefore, the position that is not affected may be determined appropriately. Further, cooling the ferromagnet 200 as necessary is also effective in suppressing the heat generation of the ferromagnet 200. Further, the length and the thickness of the ferromagnet 200 differ according to the use condition thereof and thus are not determined in particular, but as for the length, several tens of millimeters or more is sufficient generally, and as for the thickness, a better effect can be obtained when the ferromagnet 200 comes close to the opening portion 2 while not touching both the end face portions 2a, 2b of the open pipe 1.

Further, as for the method to install the ferromagnet 200, the effect of inhibiting the induced current flowing upstream of the induction coil 100 increases when the ferromagnet 200 is installed together with the impeder 7 that suppresses the current around the inner peripheral surface, in a state where the current does not flow to the inner periphery from the end face portions 2a, 2b of the open pipe 1. That is, as illustrated in FIG. 12 and FIG. 13, the ferromagnet 20 is preferably installed so as to be provided above the impeder 7 between the end portion of the impeder 7 on the upstream side and the induction coil 100.

Further, the current suppressing effect is increased when a gap between the ferromagnet 200 and the end face portions 2a, 2b of the open pipe 1 is as narrow as possible, and the effect deteriorates as the gap becomes wider, and therefore, it is preferred to bring the ferromagnet 200 and the end face portions 2a, 2b of the open pipe 1 as close as possible to each other.

When the ferromagnet 200 is installed, in practice, the end face portions 2a, 2bof the open pipe 1 are considered to come in contact with the ferromagnet 200. Here, in the case where ferrite is used for the ferromagnet 200, for example, the ferromagnet 200 is easily cracked when an impact is applied thereto. When the ferromagnet 200 formed of ferrite is cracked as above, equipment problem such that the crack is bitten by the downstream squeeze rolls 6 or is caught in the induction coil 100 may occur. Thus, it is preferred to coat the outer surface of the ferromagnet 200 in consideration of safety and productivity in the device. That is, it is more preferred to use a resin plate or the like for the outer surface of the ferromagnet 200 as a protective plate, to thereby make the ferromagnet 200 difficult to crack even when an impact is applied to the ferromagnet 200.

As materials to coat the ferromagnet 200, any non-magnetic material or non-conductive material may be used, and the ferromagnet 200 may be coated with a glass tape or a heat-resistant vinyl tape, molding with resin may be used, or rubber or the like may be attached. Although such coating of the ferromagnet 200 is not always essential, it is more preferable in the viewpoint of safe operation.

Further, regarding the installation of the ferromagnet 200, for example, in the case where the positions of the end face portions 2a, 2b of the open pipe 1 are twisted and displaced during running, if the ferromagnet 200 is installed fixedly, there is a considerable risk of the ferromagnet 200 coming into contact with the end face portions 2a, 2b to be cracked. Thus, the ferromagnet 200 may include a moving mechanism capable of moving so as to avoid damage thereof in the opening portion 2 between the end face portions 2a, 2b when the end face portions 2a, 2b in the open pipe 1 during running come into contact with the ferromagnet 200. Detailed explanation of such a moving mechanism is omitted (see Fig. 13 to FIG. 15, their explanations, and the like of International Publication No. 2011/034119, for example).

(Third embodiment)

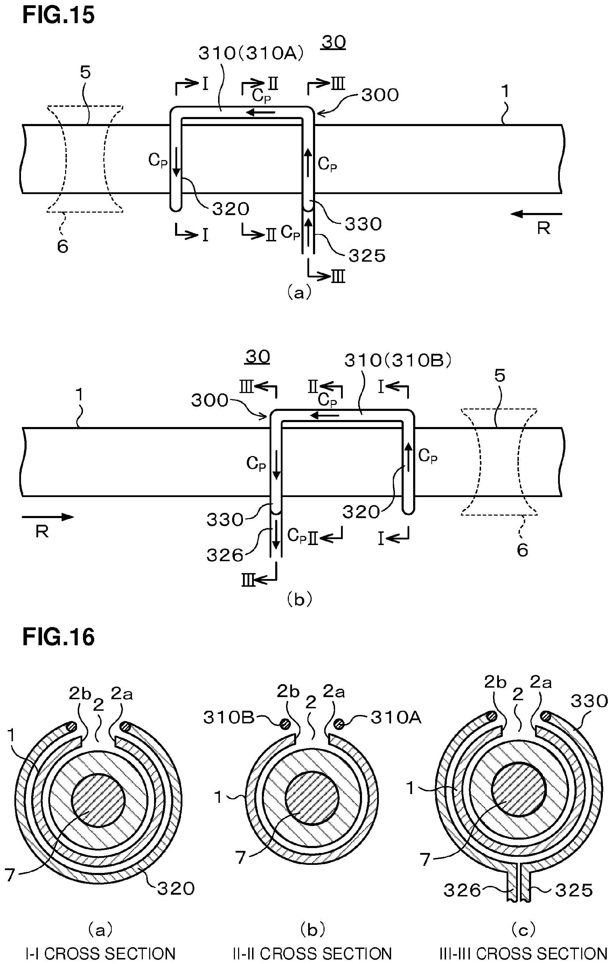

Next, there will be explained a constitution of an electric resistance welded pipe welding device 30 according to a third embodiment of the present invention with reference to FIG. 14 to FIG. 16(a) to FIG. 16(c). Regarding no illustration of the impeder case, the same as in the above-described first embodiment is applied. FIG. 14 is a plan view schematically illustrating the electric resistance welded pipe welding device 30 according to this embodiment, and FIG. 15(a) and FIG. 15(b) are side views of the electric resistance welded pipe welding device 30 illustrated in FIG. 14, FIG. 15(a) is a left side view viewed from the left side in the running direction, and FIG. 15(b) is a right side view viewed from the right side in the running direction. FIG. 16(a) to FIG. 16(c) each are a transverse cross-sectional view of the electric resistance welded pipe welding device 30 illustrated in FIG. 14 and FIG. 15(a) and FIG. 15(b), FIG. 16(a) is a I-I cross-sectional view taken along the I-I line in FIG. 14 and FIG. 15(a) and FIG. 15(b), FIG. 16(b) is a II-II cross-sectional view taken along the II-II line in FIG. 14 and FIG. 15(a) and FIG. 15(b), and FIG. 16(c) is a III-III cross-sectional view taken along the III-III line in FIG. 14 and FIG. 15(a) and FIG. 15(b).

As illustrated in FIG. 14 to FIG. 16(a) to FIG. 16(c), in the electric resistance welded pipe welding device 30 according to this embodiment, a metal strip 1 running in a running direction R is bent into a cylindrical shape by not-illustrated rolls so that both end face portions (end face portions) 2a, 2b in the width direction of the metal strip 1 face with a gap left therebetween to be formed into an open pipe 1, and then a high-frequency current is applied to an induction coil 300 as an induction heating means that is arranged in the vicinity of an opening portion 2 of the open pipe 1, and generated induced currents melt both the end face portions 2a, 2b. That is, the electric resistance welded pipe welding device 30 causes the induction coil 300 to induce the high-frequency current being the induced current in the vicinity of the opening portion 2 of the open pipe 1. The electric resistance welded pipe welding device 30 according to this embodiment is a device for manufacturing an electric resistance welded pipe, in which of the open pipe 1 having the opening portion 2 extending in the running direction, the end face portions facing the opening portion 2 each other from both sides and made of a pipe material (in other words, the end face portions facing across the opening portion 2) 2a, 2b are both melted by the induced currents generated by the induction heating means, and at the same time, the end face portions 2a, 2b are brought into contact with each other at a joint portion 5 to be welded while gradually narrowing the gap of the opening portion 2. This electric resistance welded pipe welding device 30 includes, as the induction heating means, the induction coil 300 composed of a pair of opening-vicinity conductor parts 310A and 310B (hereinafter, A means one end face portion 2a side, B means the other end face portion 2b side, and the paired opening-vicinity conductor parts are sometimes described as "opening-vicinity conductor parts 310" collectively), a first-portion circulating conductor part 320, and a second-portion circulating conductor part 330. That is, the electric resistance welded pipe welding device 30 according to this embodiment differs in the induction coil structure from the above-described first embodiment. More concretely, the electric resistance welded pipe welding device 30 differs from the electric resistance welded pipe welding device 10 according to the first embodiment in that the two portion circulating conductor parts (the first-portion circulating conductor part 320 and the second-portion circulating conductor part 330) are provided and power supply connection conductor parts (later-described power supply connection conductor parts 325, 326) to be connected to a not-illustrated high-frequency power supply are integrally provided in the second-portion circulating conductor part 330. The other constitution of the electric resistance welded pipe welding device 30 is the same as the electric resistance welded pipe welding device 10 according to the first embodiment, and thus the differences from the electric resistance welded pipe welding device 10 will be mainly explained below.

The paired opening-vicinity conductor parts 310A and 310B are, as illustrated in FIG. 14, FIG. 15(a) and FIG. 15(b), and FIG. 16(b), conductors extended in the running direction along the end face portions 2a, 2b on both sides of the opening portion 2 respectively, and are each arranged at the position not overlapping the opening portion 2 in a plan view apart from an outer peripheral surface of the open pipe 1. Incidentally, the opening-vicinity conductor parts 310A and 310B may be arranged at the positions not overlapping the opening portion 2 in a plan view, namely, at the positions where end portions, of the opening-vicinity conductor parts 310A and 310B, on the side close to the opening portion 2 and the end face portions 2a, 2b of the opening portion 2 are almost in contact in a plan view. However, the opening-vicinity conductor parts 310A and 310B are preferably arranged at the positions where the opening-vicinity conductor parts 310A and 310B and an impeder 7 are not seen via the opening portion 2.

The first-portion circulating conductor part 320 is, as illustrated in FIG. 14, FIG. 15(a) and FIG. 15(b), and FIG. 6(c), integrally provided at at least end portions, of the opening-vicinity conductor parts 310, on the side close to the joint portion 5 in the longitudinal direction, and is arranged apart from the outer peripheral surface of the open pipe 1 so as to circulate around the portion, of the outer peripheral surface of the open pipe 1, excluding the opening portion 2. Further, the second-portion circulating conductor part 330 is, as illustrated in FIG. 14, FIG. 15(a) and FIG. 15(b), and FIG. 6(a), integrally provided at end portions, of the opening-vicinity conductor parts 310, on the side far from the joint portion 5 in the longitudinal direction (on the upstream side in the running direction relative to the first-portion circulating conductor part 320), and is arranged apart from the outer peripheral surface of the open pipe 1 so as to circulate around the portion, of the outer peripheral surface of the open pipe 1, excluding the opening portion 2. Incidentally, one of the first-portion circulating conductor part 320 and the second-portion circulating conductor part 330 is connected to the not-illustrated high-frequency power supply. In the induction coil 300 according to this embodiment illustrated in FIG. 14 to FIG. 16(a) to FIG. 16(c) as an example, the second-portion circulating conductor part 330 is connected to the not-illustrated high-frequency power supply by the power supply connection conductor parts 325, 326. Further, there is illustrated an example where positions of the power supply connection conductor parts 325, 326 connected to the second-portion circulating conductor part 330 are the positions corresponding to the lowermost portion of the second-portion circulating conductor part 330 here, but the positions are not limited to this, and these connected positions may also be arbitrary circumferential positions of the second-portion circulating conductor part 330 in the circumferential direction along the portion, of the open pipe 1, excluding the opening portion 2.

The material of the induction coil 300 used in the present invention is the same as that of the above-described induction coil 100. Further, the shape of the induction coil 300 is also not limited in particular providing that the induction coil 300 is composed of the above-described opening-vicinity conductor parts 310 and portion circulating conductor parts 320, 330. For example, regarding the shape of the opening-vicinity conductor part 310, the opening-vicinity conductor part 310 may have a curved portion similarly to the opening-vicinity conductor part 110. Further, the shape of the portion circulating conductor parts 320, 330 may be, similarly to the first-portion circulating conductor part 120, such a shape as to draw a rectangular layer (rectangular coil). Further, the number of layers of the above is set to one.

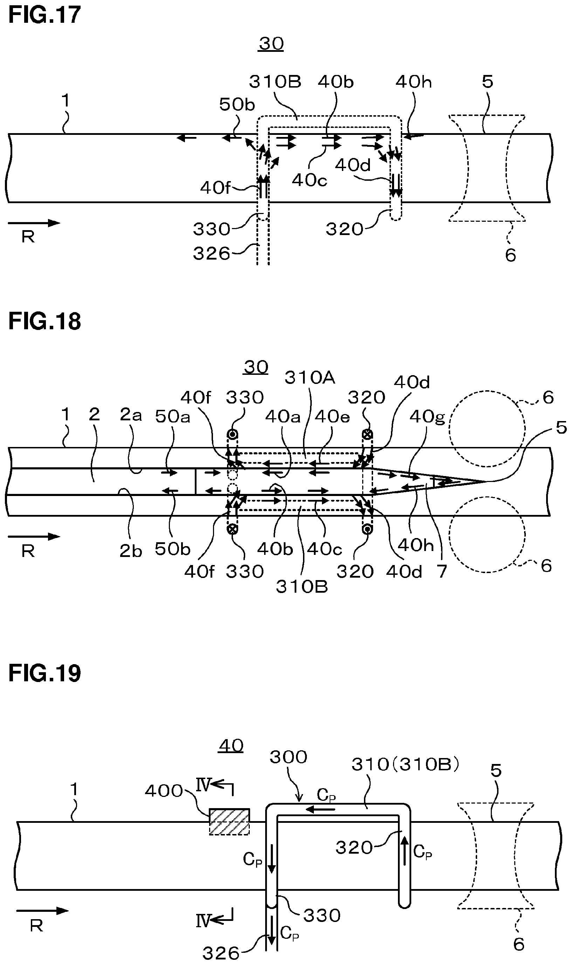

As illustrated in FIG. 15(a) and FIG. 15(b), the electric resistance welded pipe welding device 30 according to this embodiment passes a primary current $C_P$ through the induction coil 300 (the direction of the primary current $C_P$ illustrated in FIG. 15(a) and FIG. 15(b) is illustrated as a direction of an alternating current at a certain moment as a matter of convenience, and the case where the current alternates to flow in an opposite direction is of course also included). On this occasion, the high-frequency primary current flows through the induction coil 300 to generate a magnetic flux, and thereby in the open pipe 1, such a distribution of induced currents 40a, 40b, 40c, 40d, 40e, 40f, 40g, and 40h as illustrated by arrows in FIG. 17 and FIG. 18 (alternating induced currents taken at a certain moment) is generated. More details will be described as follows. Incidentally, FIG. 17 illustrates, out of the distribution of induced currents illustrated in FIG. 18, only the distribution of induced currents of the right side surface in the running direction, in which the illustration of the distribution of induced currents of the left side surface in the running direction is omitted.

As illustrated in FIG. 15(a), when the alternating high-frequency current is taken at a certain moment, the primary current $C_P$ flowing through the induction coil 300 flows upward from below in FIG. 5(a) through the power supply connection conductor part 325 connected to the not-illustrated high-frequency power supply, flows so as to circulate around (almost half-circle) the periphery of the open pipe 1 through the left half of the second-portion circulating conductor part 330 in the running direction, and then flows in the running direction (from right to left in FIG. 15(a)) through the opening-vicinity conductor part 310A. Then, the current flowing through the induction coil 300 flows so as to circulate around (almost circle) the periphery of the open pipe 1 through the first-portion circulating conductor part 320 side to then flow in a direction opposite to the running direction (from right to left in FIG. 15(b)) through the opening-vicinity conductor part 310B. Further, the current flowing through the induction coil 300 flows so as to circulate around (almost half-circle) the periphery of the open pipe 1 through the right half of the second-portion circulating conductor part 330 in the running direction, and then flows downward from above in FIG. 15(b) through the power supply connection conductor part 326 connected to the above-described high-frequency power supply to return to the high-frequency power supply.

When the primary current flows to the induction coil 300 in the above-described path, the induced current flowing around the outer peripheral surface of the open pipe 1 in a direction opposite to the primary current at the same moment is generated. Concretely, as illustrated in FIG. 17 and FIG. 18 each illustrating the same moment as in FIG. 15(a) and FIG. 15(b), by the primary current $C_P$ flowing through the induction coil 300, in the vicinity of the induction coil 300 of the right half of the second-portion circulating conductor part 330 in the running direction, the induced current 40f to flow through the outer surface of the open pipe 1 is generated, in the vicinity of the opening-vicinity conductor part 310B, the current is divided into the induced current 40c to flow through the outer surface of the open pipe 1 and the induced current 40b to flow through the end face portion of the open pipe 1 to generate the induced currents, in the vicinity of the first-portion circulating conductor part 320, the induced current 40d to flow through the outer surface of the open pipe 1 is generated, in the vicinity of the opening-vicinity conductor part 310A, the current is divided into the induced current 40e to flow through the outer surface of the open pipe 1 and the induced current 40a to flow through the end face portion of the open pipe 1 to generate the induced currents, and in the vicinity of the induction coil of the left half of the second-portion circulating conductor part 330 in the running direction, the induced current 40f to flow through the outer surface of the open pipe 1 is generated, and the induced currents flow so as to join these induced currents continuously to form a main current loop (closed circuit) 40f, 40b + 40c, 40d, 40a + 40e, 40f. Further, with the vicinity of a coupling portion of the end portion on the downstream side of the opening-vicinity conductor part 310A and the first-portion circulating conductor part 320 and the vicinity of a coupling portion of the end portion on the downstream side of the opening-vicinity conductor part 310B and the first-portion circulating conductor part 320 set to the starting point and the end point respectively, a current loop of the induced currents 40g, 40h separately flowing through the end face portions on the joint portion 5 side from this main current loop is formed. Further, with the vicinity of a coupling portion of the end portion on the upstream side of the opening-vicinity conductor parts 310A and the second-portion circulating conductor part 330 and the vicinity of a coupling portion of the end portion on the upstream side of the opening-vicinity conductor parts 310B and the second-portion circulating conductor part 330 set to the starting point and the end point respectively, a current loop is formed by induced currents 50a, 50b flowing upstream separately from this main current loop. Among them, by the induced currents 40a, 40b flowing through the end face portions 2a, 2b and the induced currents 40g, 40h flowing through both the end face portions 2a, 2b on the welded portion side, both the end face portions 2a, 2b are heated and melted to be welded. On this occasion, at the position on the joint portion 5 side, the impedance decreases because the width of the opening portion 2 of the open pipe 1 narrows, so that an effect that the temperature is likely to rise high due to current concentration caused by a proximity effect also works for the welding. Further, since the opening-vicinity conductor parts 310 are arranged along both the end face portions 2a, 2b of the opening portion 2, the induced currents tend to flow near the opening-vicinity conductor parts 310 by the proximity effect, thereby enabling efficient flow of the induced currents to both the end face portions 2a, 2b, resulting in that current amounts of the induced currents 40a, 40b increase and the joint portion 5 can be heated efficiently.

In this embodiment, the induction coil 300 having the above-described constitution is used, so that the closed circuit composed of the induced currents 40f, 40b, 40d, 40a, and 40f and the closed circuit composed of the induced currents 40f, 40c, 40d, 40e, and 40f are formed without striding over the opening portion 2 of the open pipe 1. As a result, it is possible to avoid the magnetic flux to directly enter the impeder 7 from the induction coil 300, and at the same time, to reduce the peak and the average intensity of the induced currents flowing through the end face portions 2a, 2b of the opening portion 2 of the open pipe 1. As a result, it is possible to prevent damage of the impeder 7, and such an effect becomes useful in particular when manufacturing a small-diameter pipe, for example, a pipe whose inside diameter is about 100 mm or less, in particular, a thick-walled pipe, for example, a pipe whose wall thickness is greater than 6 mm.

Further, the induction coil 300 in this embodiment does not circulate around the open pipe like the conventional induction coil described in Patent Document 1 and has the opening-vicinity conductor parts 310, thereby making it possible to distance the power supply connection conductor parts 325, 326 from the joint portion 5, resulting in that it is possible to secure a space above the open pipe 1 and further it is also possible to bring the induction coil 300 itself close to the squeeze rolls 6. Accordingly, it becomes possible to install accessory equipment such as a shield or a measurement device in the space above the open pipe 1. Further, the induction coil 300 is brought close to the squeeze rolls 6, thereby making it also possible to improve the heating efficiency when manufacturing the electric resistance welded pipe.

Incidentally, the electric resistance welded pipe welding device 30 of this embodiment is also not limited to the small-diameter pipe and is applicable also to an intermediate-diameter pipe, similarly to the electric resistance welded pipe welding device 10 of the first embodiment.

Further, a preferred arrangement of the induction coil 300 in this embodiment is the same as that of the induction coil 100 in the first embodiment. That is, the distance between the inner peripheral surface of the induction coil 300 and the outer peripheral surface of the open pipe 1 is preferred to be 5 to 10 mm.

Further, in this embodiment, the first-portion circulating conductor part 320 is desired to be as close as possible to the joint portion 5, but in order to avoid interference between a coil conductor and the squeeze rolls 6 and avoid induction heating of the squeeze rolls 6, the shortest distance G between the first-portion circulating conductor part 320 and the squeeze rolls 6 is preferred to be 20 mm or more (G ≥ 20 mm). The shortest distance G indicating the position of a leading end of the induction coil 300 is made to fall within the above-described range, thereby making it possible to effectively perform welding in an actual device.

Further, in this embodiment, a distance L between the end portion, of the opening-vicinity conductor part 310, on the side far from the joint portion 5 in the longitudinal direction and the joint portion 5 preferably satisfies Expression (1) below. The distance L, which indicates the distance between the second-portion circulating conductor part 330 and the joint portion 5, is designed to satisfy Expression (1) below, thereby making it possible to obtain a sufficient heating amount in the joint portion 5 and improve the heating efficiency.

$$2L \le 3\pi D \cdots (1)$$

where L is the distance between the end portion, of the opening-vicinity conductor part 310, on the side far from the joint portion 5 in the longitudinal direction and the joint portion 5, and D is the inside diameter of the open pipe 1.

Here, in this embodiment, as illustrated in FIG. 17 and FIG. 18 each illustrating the alternating high-frequency current taken at a certain moment, regarding the induced currents immediately below the second-portion circulating conductor part 330, in addition to the induced currents 40b, 40c flowing in the direction toward the joint portion 5 and the induced currents 40a, 40e flowing in the direction from the joint portion 5, some currents are divided to flow upstream of the induction coil 300. That is, as the induced currents, other than the induced currents 40a, 40b, 40c, 40d, 40e, 40f, 40g, and 40h, as described above, an induced current 50b to flow upstream from immediately below the second-portion circulating conductor part 330 of the induction coil 300 and an induced current 50a to return to immediately below the second-portion circulating conductor part 330 from the upstream side of the induction coil 300 are also generated. These induced currents 50a, 50b form a closed circuit at the outer surface of the pipe on the upstream side of the induction coil 300 and are consumed in heat generation that does not contribute to welding at the outer surface of the pipe where this closed circuit is formed. These induced currents 50a, 50b hardly contribute to heating of the joint portion 5, to thus be consumed as part of useless power of the power supplied to the induction coil 300.

Thus, in an electric resistance welded pipe welding device 40 according to a fourth embodiment of the present invention to be described below, in order to inhibit the induced currents 50a, 50b from flowing upstream of the induction coil 300, a ferromagnet 400 is arranged between both the end face portions 2a, 2b of the opening portion 2 of the open pipe 1 on the upstream side of the induction coil 300 in the running direction. Hereinafter, the electric resistance welded pipe welding device 40 according to the fourth embodiment of the present invention will be described.

(Fourth embodiment)

First, there will be explained a constitution of the electric resistance welded pipe welding device 40 according to the fourth embodiment of the present invention with reference to FIG 19. FIG. 19 is a side view schematically illustrating the electric resistance welded pipe welding device 40 according to this embodiment (right side view viewed from the right side in the running direction). Incidentally, in the fourth embodiment, similarly to the second embodiment, in order to inhibit the induced currents 50a, 50b from flowing upstream of the induction coil 300, a ferromagnet is arranged between both the end face portions 2a, 2b of the opening portion 2 of the open pipe 1 on the upstream side of the induction coil 300 in the running direction.

As illustrated in FIG. 19, the electric resistance welded pipe welding device 40 according to this embodiment further includes the ferromagnet 400 arranged in the opening portion 2 on the upstream side in the running direction relative to the induction coil 300 in addition to the same constitution as that of the above-described electric resistance welded pipe welding device 30 according to the third embodiment. When a current flows, this ferromagnet 400 works so as to inhibit the current and inhibits the current flowing upstream of the induction coil 300 due to having high impedance. Concretely, as illustrated in FIG. 20, the ferromagnet 400 is arranged in an expected flow path port of the induced currents 50a, 50b (see FIG. 17 and FIG. 18) that tend to flow upstream of the induction coil 300, and therefore when the induced currents 50a, 50b tend to flow to the open pipe 1 facing the ferromagnet 400, the ferromagnet 400 works so as to inhibit the induced currents 50a, 50b, so that it is possible to inhibit the induced currents 50a, 50b that tend to flow upstream of the induction coil 300. As a result, the distribution of induced currents comes close to such a distribution of induced currents as illustrated in FIG. 21. Therefore, it is possible to let a large amount of induced current generated on the outer peripheral surface of the open pipe 1 flow to the joint portion 5 side, and it becomes possible to increase the density of the currents flowing in the joint portion 5 and increase the heat generation amount.

Further, concrete constitution, functions, arrangement, and so on of the ferromagnet 400 are the same as those of the above-described ferromagnet 200 according to the second embodiment (see FIG. 11), so that its detailed explanations are omitted.

(Fifth embodiment)

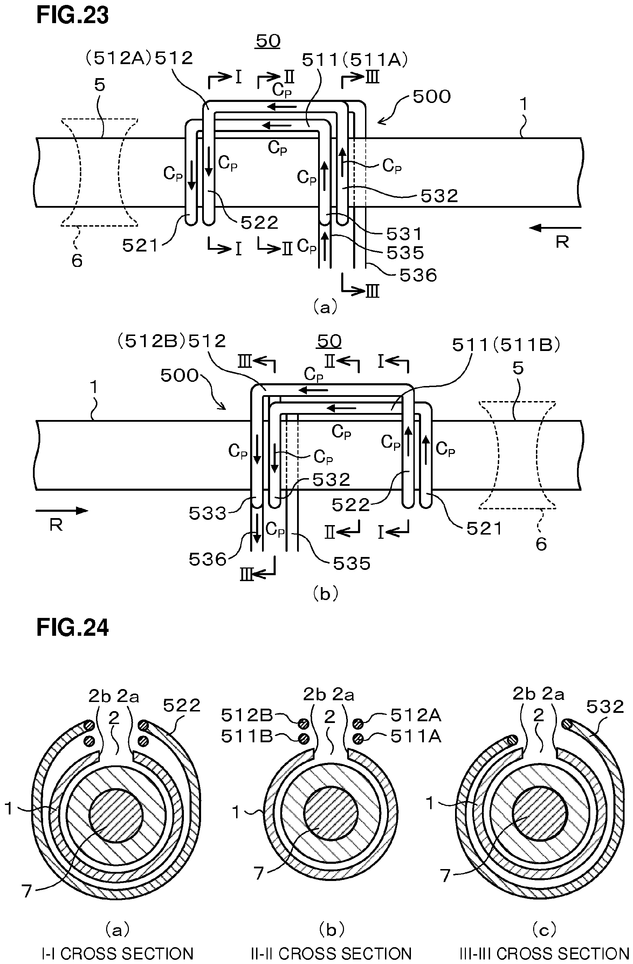

Next, there will be explained a constitution of an electric resistance welded pipe welding device 50 according to a fifth embodiment of the present invention with reference to FIG. 22 to FIG. 24(a) to FIG. 24(c). Regarding no illustration of the impeder case, the same as in the above-described first embodiment and third embodiment is applied. FIG. 22 is a plan view schematically illustrating the electric resistance welded pipe welding device 50 according to this embodiment, and FIG. 23(a) and FIG. 23(b) are side views of the electric resistance welded pipe welding device 50 illustrated in FIG. 22, FIG. 23(a) is a left side view viewed from the left side in the running direction, and FIG. 23(b) is a right side view viewed from the right side in the running direction. FIG. 24(a) to FIG. 24(c) each are a transverse cross-sectional view of the electric resistance welded pipe welding device 50 illustrated in FIG. 22 and FIG. 23(a) and FIG. 23(b), FIG. 24(a) is a I-I cross-sectional view taken along the I-I line in FIG. 22 and FIG. 23(a) and FIG. 23(b), FIG. 24(b) is a II-II cross-sectional view taken along the II-II line in FIG. 22 and FIG. 23(a) and FIG. 23(b), and FIG. 24(c) is a III-III cross-sectional view taken along the III-III line in FIG. 22 and FIG. 23(a) and FIG. 23(b).

Incidentally, the electric resistance welded pipe welding device 50 of this embodiment is also not limited to the small-diameter pipe and is applicable also to an intermediate-diameter pipe, similarly to the electric resistance welded pipe welding device 10 of the first embodiment and the electric resistance welded pipe welding device 30 of the third embodiment.

As illustrated in FIG. 22 to FIG. 24(a) to FIG. 24(c), in the electric resistance welded pipe welding device 50 according to this embodiment, a metal strip 1 running in a running direction R is bent into a cylindrical shape by not-illustrated rolls so that both end face portions (end face portions) 2a, 2b in the width direction of the metal strip 1 face with a gap left therebetween to be formed into an open pipe 1, and then a high-frequency current is applied to a two-layer induction coil 500 as an induction heating means that is arranged in the vicinity of an opening portion 2 of the open pipe 1, and generated induced currents melt both the end face portions 2a, 2b. That is, the electric resistance welded pipe welding device 50 causes the induction coil 500 to induce the high-frequency current being the induced current in the vicinity of the opening portion 2 of the open pipe 1. The electric resistance welded pipe welding device 50 according to this embodiment is a device for manufacturing an electric resistance welded pipe, in which of the open pipe 1 having the opening portion 2 extending in the running direction, the end face portions facing the opening portion 2 each other from both sides and made of a pipe material (in other words, the end face portions facing across the opening portion 2) 2a, 2b are both melted by the induced currents generated by the induction heating means, and at the same time, the end face portions 2a, 2b are brought into contact with each other at a joint portion 5 to be welded while gradually narrowing the gap of the opening portion 2.

This electric resistance welded pipe welding device 50 includes, as the induction heating means, the induction coil 500 composed of a pair of opening-vicinity conductor parts 510A and 510B (hereinafter, A means one end face portion 2a side, B means the other end face portion 2b side, and the paired opening-vicinity conductor parts are sometimes described as "opening-vicinity conductor parts 510" collectively), a first-portion circulating conductor part 520, and a second-portion circulating conductor part 530. The electric resistance welded pipe welding device 50 according to this embodiment differs in the induction coil structure, in which the induction coil 500 forms two layers, and the like, from the above-described first embodiment and third embodiment. More concretely, the electric resistance welded pipe welding device 50 differs from the electric resistance welded pipe welding device 10 according to the first embodiment and the electric resistance welded pipe welding device 30 according to the third embodiment in that the electric resistance welded pipe welding device 50 includes the two-layer induction coil 500 so that the first-portion circulating conductor part 520 includes portion circulating conductor parts 521, 522 in the order of alignment on the upstream side from the joint portion 5 side, the paired opening-vicinity conductor parts 510 (510A, 510B) include opening-vicinity conductor parts 511 (511A, 511B) being the first layer connected to the portion circulating conductor part 521 and opening-vicinity conductor parts 512 (512A, 512B) being the second layer connected to the portion circulating conductor part 522 above the first layer, and the second-portion circulating conductor part 530 includes portion circulating conductor parts 531, 532, and 533 in the order of alignment on the upstream side from the joint portion 5 side, and out of these portion circulating conductor parts, the portion circulating conductor part 531 for about a half-circle is connected to a power supply connection conductor part 535 and the opening-vicinity conductor part 511A, the portion circulating conductor part 532 for about one circle is connected to the opening-vicinity conductor part 511B and the opening-vicinity conductor part 512A, and the portion circulating conductor part 533 for about a half-circle is connected to the opening-vicinity conductor part 512B and a power supply connection conductor part 536.

As described above, the induction coil 500 includes the two portion circulating conductor parts 521, 522 of the first-portion circulating conductor part 520 at end portions, of the opening-vicinity conductor parts 511, 512, on the side close to the joint portion 5 in the longitudinal direction respectively to be formed in two layers. In the following explanation, the portion circulating conductor part 521 is referred to as the first layer and the portion circulating conductor part 522 is referred to as the second layer in some cases.

First, there will be explained a constitution of the opening-vicinity conductor parts 510 (511, 512) of the induction coil 500. In the first layer, the paired opening-vicinity conductor parts 511A and 511B are, as illustrated in FIG. 22 to FIG. 24(a) to FIG. 24(c), conductors extended in the running along the end face portions 2a, 2b on both sides of the opening portion 2 respectively, and are each arranged at the position not overlapping the opening portion 2 in a plan view apart from an outer peripheral surface of the open pipe 1. In the second layer, the paired opening-vicinity conductor parts 512A and 512B each have the same constitution as that of the paired opening-vicinity conductor parts 511A and 511B and are arranged above the paired opening-vicinity conductor parts 511A and 511B in an overlapping manner. Incidentally, the paired opening-vicinity conductor parts 512A and 512B may be arranged on the outer side of the paired opening-vicinity conductor parts 511A and 511B relative to the opening portion 2 in a plan view (at adjacent positions on the side apart from the opening portion 2), but the paired opening-vicinity conductor parts 512A and 512B of the second layer are preferably arranged above the paired opening-vicinity conductor parts 511A and 511B in an overlapping manner respectively because regions of induced currents generated at the outer peripheral surface of the open pipe 1 by the opening-vicinity conductor parts 510 are easily collected to regions close to the end face portions 2a, 2b.

Next, there will be explained a constitution of the first-portion circulating conductor parts 520 (521, 522) on the side close to the joint portion 5 in the induction coil 500. In the first layer, the portion circulating conductor part 521 is, as illustrated in FIG. 22 to FIG. 24(a) to FIG. 24(c), integrally provided at at least end portions, of the opening-vicinity conductor parts 511, on the side close to the joint portion 5 in the longitudinal direction and is arranged apart from the outer peripheral surface of the open pipe 1 so as to circulate around the portion, of the outer peripheral surface of the open pipe 1, excluding the opening portion 2. In the second layer, the portion circulating conductor part 522 is integrally provided at at least end portions, of the opening-vicinity conductor parts 512, on the side close to the joint portion 5 in the longitudinal direction and is arranged apart from the outer peripheral surface of the open pipe 1 so as to circulate around the portion, of the outer peripheral surface of the open pipe 1, excluding the opening portion 2. Further, the portion circulating conductor part 522 of the second layer is arranged on the upstream side in the running direction relative to the portion circulating conductor part 521 of the first layer in order to avoid interference with squeeze rolls 6.

Next, there will be explained a constitution of the second-portion circulating conductor parts 530 (531, 532, and 533) on the side far from the joint portion 5 in the induction coil 500. The portion circulating conductor part 531 for about a half-circle of the first layer is, as illustrated in FIG. 22 to FIG. 24(a) to FIG. 24(c), integrally provided at end portions, of the opening-vicinity conductor parts 511A, on the side far from the joint portion 5 in the longitudinal direction and is arranged apart from the outer peripheral surface of the open pipe 1 so as to circulate around (almost half-circle) the portion, of the outer peripheral surface of the open pipe 1, excluding the opening portion 2. The portion circulating conductor part 531 is connected to a not-illustrated high-frequency power supply by the power supply connection conductor part 535. The portion circulating conductor part 532 for about the remaining half-circle of the first layer and the portion circulating conductor part 532 for about a half-circle of the second layer are integrally provided end portions, of the opening-vicinity conductor parts 511B, 512A, on the side far from the joint portion 5 in the longitudinal direction and are arranged apart from the outer peripheral surface of the open pipe 1 so as to circulate around (almost circle) the portion, of the outer peripheral surface of the open pipe 1, excluding the opening portion 2. The portion circulating conductor part 533 for about the remaining half-circle of the second layer is integrally provided at the end portion, of the opening-vicinity conductor part 512B, on the side far from the joint portion 5 in the longitudinal direction and is arranged apart from the outer peripheral surface of the open pipe 1 so as to circulate around (almost half-circle) the portion, of the outer peripheral surface of the open pipe 1, excluding the opening portion 2. The portion circulating conductor part 533 is connected to the not-illustrated high-frequency power supply by the power supply connection conductor part 536. Incidentally, there is described the example where the positions of the second-portion circulating conductor parts 531, 533 connected to the power supply connection conductor parts 535, 536 are positions corresponding to the lowermost portions of the second-portion circulating conductor parts 531, 533 here, but these connection positions are not limited to this and may be arbitrary circumferential positions that are determined by complementarily appropriately changing the circumferential lengths of the second-portion circulating conductor parts 531, 533 in the circumferential direction along the portion, of the open pipe 1, excluding the opening portion 2.

The material of the induction coil 500 used in the present invention is the same as that of the above-described induction coils 100, 300. Further, the shape of the induction coil 500 is also not limited in particular providing that the induction coil 500 is composed of the above-described opening-vicinity conductor parts 510 (511, 512) and portion circulating conductor parts 520 (521, 522), 530 (531, 532, and 533). For example, regarding the shape of the opening-vicinity conductor parts 510 (511, 512), the opening-vicinity conductor parts 510 (511, 512) each may have a curved portion similarly to the opening-vicinity conductor parts 110, 310. Further, the shape of the portion circulating conductor parts 520 (521, 522), 530 (531, 532, and 533) may be, similarly to the portion circulating conductor parts 120, 320, and 330, such a shape as to draw a rectangular layer (rectangular coil).

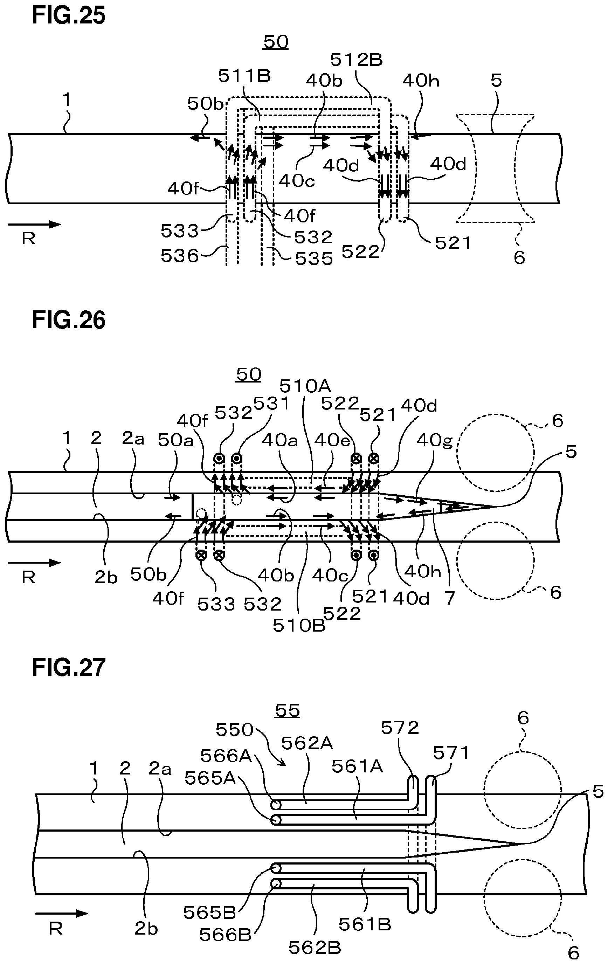

As illustrated in FIG. 23(a) and FIG. 23(b) as an example, the electric resistance welded pipe welding device 50 according to this embodiment passes a primary current $C_P$ through the induction coil 500 (the direction of the primary current $C_P$ illustrated in FIG. 23(a) and FIG. 23(b) is illustrated as a direction of an alternating current at a certain moment as a matter of convenience, and the case where the current alternates to flow in an opposite direction is of course also included). On this occasion, the high-frequency primary current flows through the induction coil 500 to generate a magnetic flux, and thereby in the open pipe 1, such a distribution of induced currents 40a, 40b, 40c, 40d, 40e, 40f, 40g, and 40h as illustrated by arrows in FIG. 25 and FIG. 26 (alternating induced currents taken at a certain moment) is generated. More details will be described as follows. Incidentally, FIG. 25 illustrates, out of the distribution of induced currents illustrated in FIG. 26, only the distribution of induced currents of the right side surface in the running direction, in which the illustration of the distribution of induced currents of the left side surface in the running direction is omitted.

As illustrated in FIG. 23(a), when the alternating high-frequency current is taken at a certain moment, the primary current $C_P$ flowing through the induction coil 500 flows upward from below in FIG. 23(a) through the power supply connection conductor part 535 connected to the not-illustrated high-frequency power supply, flows so as to circulate around (almost half-circle) the periphery of the open pipe 1 through the second-portion circulating conductor part 531, and then flows in the running direction (from right to left in FIG. 23(a)) through the opening-vicinity conductor part 511A. Then, the current flowing through the induction coil 500 flows so as to circulate around (almost circle) the periphery of the open pipe 1 through the first-portion circulating conductor part 521 side to then flow in a direction opposite to the running direction (from right to left in FIG. 23(b)) through the opening-vicinity conductor part 511B. Further, the current flowing through the induction coil 300 flows so as to circulate around (almost circle) the periphery of the open pipe 1 through the second-portion circulating conductor part 532, and then flows in the running direction (from right to left in FIG. 23(a)) through the opening-vicinity conductor part 512A. Then, the current flowing through the induction coil 500 flows so as to circulate around (almost circle) the periphery of the open pipe 1 through the first-portion circulating conductor part 522 side to then flow in a direction opposite to the running direction (from right to left in FIG. 23(b)) through the opening-vicinity conductor part 512B. Further, the current flowing through the induction coil 300 flows so as to circulate around (almost half-circle) the periphery of the open pipe 1 through the second-portion circulating conductor part 533, and then flows downward from above in FIG. 23(b) through the power supply connection conductor part 536 connected to the above-described high-frequency power supply to return to the high-frequency power supply.

When the primary current flows to the induction coil 500 in the above-described path, the induced current flowing around the outer peripheral surface of the open pipe 1 in a direction opposite to the primary current at the same moment is generated. Concretely, as illustrated in FIG. 25 and FIG. 26 each illustrating the same moment as in FIG. 23(a) and FIG. 23(b), by the primary current $C_P$ flowing through the induction coil 500, in the vicinity of the second-portion circulating conductor parts 530 (531, 532, and 533), the induced current 40f to flow through the outer surface of the open pipe 1 is generated, in the vicinity of the opening-vicinity conductor parts 510B (511B, 512B), the current is divided into the induced current 40c to flow through the outer surface of the open pipe 1 and the induced current 40b to flow through the end face portion of the open pipe 1 to generate the induced currents, in the vicinity of the first-portion circulating conductor parts 520 (521, 522), the induced current 40d to flow through the outer surface of the open pipe 1 is generated, and in the vicinity of the opening-vicinity conductor parts 510 (511A, 512A), the current is divided into the induced current 40e to flow through the outer surface of the open pipe 1 and the induced current 40a to flow through the end face portion of the open pipe 1 to generate the induced currents, and the induced currents flow so as to join these induced currents continuously to form a main current loop (closed circuit) 40f, 40b + 40c, 40d, 40a + 40e. Further, with the vicinities of coupling portions of the end portions on the downstream side of the opening-vicinity conductor parts 510 (511,512) and the first-portion circulating conductor parts 520 (521, 522) set to the starting point and the end point respectively, a current loop of the induced currents 40g, 40h separately flowing through the end face portions on the joint portion 5 side from this main current loop is formed. Further, with the vicinities of coupling portions of the end portions on the upstream side of the opening-vicinity conductor parts 510 (511, 512) and the second-portion circulating conductor parts 530 (531, 532, and 533) set to the starting point and the end point respectively, a current loop is formed by induced currents 50a, 50b flowing upstream separately from this main current loop. Among them, by the induced currents 40a, 40b flowing through the end face portions 2a, 2b and the induced currents 40g, 40h flowing through both the end face portions 2a, 2b on the welded portion side, both the end face portions 2a, 2b are heated and melted to be welded. On this occasion, at the position on the joint portion 5 side, the impedance decreases because the width of the opening portion 2 of the open pipe 1 narrows, so that an effect that the temperature is likely to rise high due to current concentration caused by a proximity effect also works for the welding. Further, since the opening-vicinity conductor parts 510 (511, 512) are arranged along both the end face portions 2a, 2b of the opening portion 2, the induced currents tend to flow near the opening-vicinity conductor parts 510 (511, 512) by the proximity effect, thereby enabling efficient flow of the induced currents to both the end face portions 2a, 2b, resulting in that current amounts of the induced currents 40a, 40b increase and the joint portion 5 can be heated efficiently.

In this embodiment, the induction coil 500 having the above-described constitution is used, so that the closed circuit composed of the induced currents 40b, 40d, 40a, and 40f and the closed circuit composed of the induced currents 40c, 40d, 40e, and 40f are formed without striding over the opening portion 2 of the open pipe 1. As a result, it is possible to avoid the magnetic flux to directly enter the impeder 7 from the induction coil 500, and at the same time, to reduce the peak and the average intensity of the induced currents flowing through the end face portions 2a, 2b of the opening portion 2 of the open pipe 1. As a result, it is possible to prevent damage of the impeder 7, and such an effect becomes useful in particular when manufacturing a small-diameter pipe, for example, a pipe whose inside diameter is about 100 mm or less, in particular, a thick-walled pipe, for example, a pipe whose wall thickness is greater than 6 mm.

Further, the induction coil 500 in this embodiment does not circulate around the open pipe like the conventional induction coil described in Patent Document 1 and has the opening-vicinity conductor parts 510, thereby making it possible to distance the power supply connection conductor parts 535, 536 from the joint portion 5, resulting in that it is possible to secure a space above the open pipe 1 and further it is also possible to bring the induction coil 500 itself close to the squeeze rolls 6. Accordingly, it becomes possible to install accessory equipment such as a shield or a measurement device in the space above the open pipe 1. Further, the induction coil 500 is brought close to the squeeze rolls 6, thereby making it also possible to improve the heating efficiency when manufacturing the electric resistance welded pipe.

Further, the induction coil 500 in the electric resistance welded pipe welding device 50 in this embodiment is formed in two layers, so that it is possible to increase the intensity of the magnetic field when the currents are the same and generate heat by small current when the magnetic field intensities are the same, thereby making it possible to improve the heating efficiency. Accordingly, providing the induction coil having a plurality of layers as above becomes particularly useful for electric resistance welding of the intermediate-diameter pipe that requires large power as described above, for example, a pipe whose inside diameter is about 100 to 700 mm. Incidentally, the electric resistance welded pipe welding device 50 in this embodiment includes the two-layer induction coil 500, but may include an induction coil of three layers or more.

Incidentally, in order to enjoy the effect by the plural layers of this induction coil 500, namely, the effect of improving the heating efficiency, the induction coil 500 only needs to include the portion circulating conductor parts of a plurality of layers in serial closed circuits as described above. Accordingly, for example, the first-portion circulating conductor parts 520 may be formed in two layers including the portion circulating conductor parts 521, 522 and the second-portion circulating conductor parts 530 may be formed in one layer. In the example illustrated in FIG. 22 to FIG. 24(a) to FIG. 24(c), in the second-portion circulating conductor parts 530, the power supply connection conductor parts 535, 536 are each provided on the side opposite to the opening portion 2, but when these power supply connection conductor parts 535, 536 are provided on the same side as the opening portion 2, the portion circulating conductor parts 531, 533 for about a half-circle can be omitted. In this case, the second-portion circulating conductor parts 530 can be formed in one layer. In this manner, the layout of the second-portion circulating conductor parts 530 can be designed arbitrarily according to the direction in which the power supply is installed.

The induction coil 500 in the above-described electric resistance welded pipe welding device 50 includes the serial closed circuits, but sometimes includes parallel closed circuits even when the first-portion circulating conductor part is provided in a plurality of layers. FIG. 27 is a plan view schematically illustrating an electric resistance welded pipe welding device 55 according to a modified example of this embodiment. The electric resistance welded pipe welding device 55 includes an induction coil 550 provided with parallel closed circuits as the induction heating means. Then, in this modified example, the induction coil 550 has a constitution in which for example, the induction coils 100 in the above-described first embodiment are provided in parallel. Parallel connection may be used in the case where it is desired to reduce the current density of the coil conductor by dividing the current, or the like from the viewpoint that the density of current to flow to the coil conductor is high to thus avoid the efficiency decrease, the safety viewpoint, or the like. In this case, electrically, the area of the coil conductor to the steel pipe only increases, and the effect is the same as that of the case of a single conductor, but a cooling path is provided independently, so that it is possible to avoid heat generation in the coil conductor and large current application is enabled.

The induction coil 550 is composed of a pair of opening-vicinity conductor parts 560A and 560B (hereinafter, A means one end face portion 2a side, B means the other end face portion 2b side, and the paired opening-vicinity conductor parts are sometimes described as "opening-vicinity conductor parts 560" collectively) and a first-portion circulating conductor part 570. The first-portion circulating conductor part 570 includes portion circulating conductor parts 571, 572 in the order of alignment on the upstream side from the joint portion 5 side. The paired opening-vicinity conductor parts 560 (560A, 560B) include opening-vicinity conductor parts 561 (561A, 561B) of the first layer connected to the portion circulating conductor part 571 and opening-vicinity conductor parts 562 (562A, 562B) of the second layer connected to the portion circulating conductor part 572. Of the opening-vicinity conductor parts 561A, 561B, 562A, and 562B, end portions on the side far from the joint portion 5 in the longitudinal direction are connected to power supply connection conductor parts 565A, 565B, 566A, and 566B respectively and these power supply connection conductor parts 565A, 565B, 566A, and 566B are connected to the not-illustrating common high-frequency power supply.

Then, in the electric resistance welded pipe welding device 55, a first closed circuit composed of the first-portion circulating conductor part 571, the opening-vicinity conductor parts 561 (561A, 561B), and the power supply connection conductor parts 565 (565A, 565B) of the first layer and a second closed circuit composed of the first-portion circulating conductor part 572, the opening-vicinity conductor parts 562 (562A, 562B), and the power supply connection conductor parts 566 (566A, 566B) of the second layer are formed in parallel.

In such an electric resistance welded pipe 55, the current from the common high-frequency power supply is divided to flow to these two closed circuits and the opening portion 2 of the open pipe 1 is inductively heated. In the case where a large current is required for electric resistance welding, for example, such an induction coil 500 may be used to divide the current. Incidentally, the method of induction heating of each of the closed circuits is the same as that by the induction coil 100 in the above-described first embodiment, and thus its detailed explanation is omitted.

Incidentally, in this modified example, in the induction coil 550, of the opening-vicinity conductor parts 561A, 561B, 562A, and 562B, the end portions on the side far from the joint portion 5 in the longitudinal direction do not circulate, but may circulate around the portion, of the outer peripheral surface of the open pipe 1, excluding the opening portion 2 like the second-portion circulating conductor parts. The layout of the end portions on the side far from the joint portion 5 of the induction coil 550 can be designed arbitrarily according to the direction in which the power supply is installed, for example.

Further, a preferred arrangement of each of the induction coils 500, 550 in this embodiment is the same as that of the induction coil 100 in the first embodiment and the induction coil 300 in the third embodiment.

(Sixth embodiment)

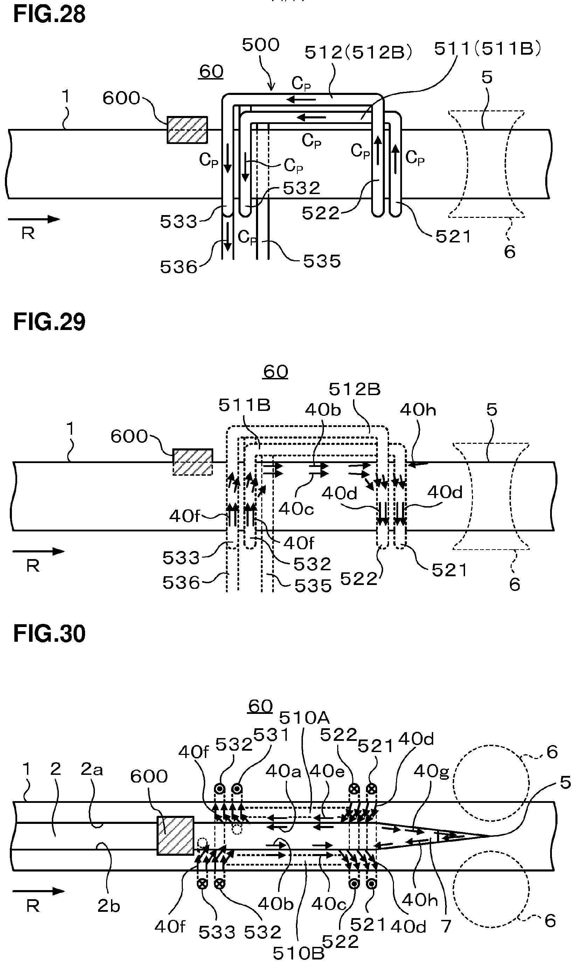

Next, there will be explained a constitution of an electric resistance welded pipe welding device 60 according to a sixth embodiment of the present invention with reference to FIG. 28. FIG. 28 is a side view schematically illustrating the electric resistance welded pipe welding device 60 according to this embodiment (a right side view viewed from the right side in the running direction). Incidentally, in the sixth embodiment, similarly to the second embodiment and the fourth embodiment, a ferromagnet is arranged between both the end face portions 2a, 2b of the opening portion 2 of the open pipe 1 on the upstream side of the induction coil 500 in the running direction in order to inhibit the induced currents 50a, 50b from flowing upstream of the induction coil 500.

As illustrated in FIG. 28, the electric resistance welded pipe welding device 60 according to this embodiment further includes a ferromagnet 600 arranged in the opening portion 2 on the upstream side in the running direction relative to the induction coil 500 in addition to the same constitution as that of the above-described electric resistance welded pipe welding device 50 according to the fifth embodiment. When a current flows, this ferromagnet 600 works so as to inhibit the current and inhibits the current flowing upstream of the induction coil 500 due to having high impedance. Concretely, as illustrated in FIG. 29, the ferromagnet 600 is arranged in an expected flow path port of the induced currents 50a, 50b (see FIG.25 and FIG. 26) that tend to flow upstream of the induction coil 500, and therefore when the induced currents 50a, 50b tend to flow to the open pipe 1 facing the ferromagnet 600, the ferromagnet 600 works so as to inhibit the induced currents 50a, 50b, so that it is possible to inhibit the induced currents 50a, 50b that tend to flow upstream of the induction coil 500. As a result, the distribution of induced currents comes close to such a distribution of induced currents as illustrated in FIG. 30. Therefore, it is possible to let a large amount of induced current generated on the outer peripheral surface of the open pipe 1 flow to the joint portion 5 side, and it becomes possible to increase the density of the currents flowing in the joint portion 5 and increase the heat generation amount.

Further, concrete constitution, functions, arrangement, and so on of the ferromagnet 600 are the same as those of the above-described ferromagnet 200 according to the second embodiment (see FIG. 11), so that its detailed explanations are omitted.

In the foregoing, the preferred embodiments of the present invention have been explained with reference to the attached drawings, but the present invention is not limited to such examples. It is apparent that those skilled in the art are able to devise various variation or modification examples within the scope of the invention as defined in the claims, and it should be understood that such examples belong to the technical scope of the present invention as a matter of course.

EXAMPLE

Hereinafter, there will be explained examples of the present invention, but the present invention is not limited to the following examples.

A steel pipe made of ordinary steel having a pipe diameter $\phi$ of 31.8 mm and having a thickness of 6.3 mm was subjected to electric resistance welded pipe welding by applying a current of 3000 A thereto by using electric resistance welded pipe welding devices of Example 1 to Example 7 and Comparative example 1 to be described below, and then the total heat generation amount of end faces of the steel pipe in a range of a joint portion to 700 mm on the upstream side was measured by an infrared imaging device. Results thereof are illustrated in Table 1. Incidentally, in Table 1, a total heat generation amount ratio is described as the total heat generation amount, but this total heat generation amount ratio indicates the ratio of the total heat generation amount of the end faces of the steel pipe in each of the examples and the comparative example to the case where the total heat generation amount of end faces of an opening portion obtained when heat is generated by the same current flowing to an ordinary induction coil to circulate while striding over the opening portion of an open pipe with the same width and the same distance from a welded portion is set to one. Further, results obtained by calculating the maximum magnetic flux density [T] of an impeder by performing a FEM (Finite Element Method) analysis under the condition of such electric resistance welded pipe welding are illustrated in Table 1 similarly.

(Example 1)

As the electric resistance welded pipe welding device in Example 1, the electric resistance welded pipe welding device in the first embodiment illustrated in FIG. 4 to FIG. 6(a) and FIG. 6(b) was used. Concretely, a device including an induction coil having a pair of opening-vicinity conductor parts and one portion circulating conductor part (first-portion circulating conductor part) on the welded portion side, which was a water-cooled copper pipe having an outside diameter of 10 mm and having a thickness of 1.5 mm, was used. Here, the opening-vicinity conductor parts were arranged in a range of the position 80 mm upstream in the running direction from the joint portion to the position 100 mm upstream from the position, at the position where the water-cooled copper pipe was put 5 mm outside in the circumferential direction from the opening portion of the open pipe (steel pipe) and 10 mm distant in the radial direction from the steel pipe. Further, the portion circulating conductor part was arranged at the position 80 mm upstream in the running direction from the joint portion to be the position of the end portions, of the opening-vicinity conductor parts, on the welded portion side so as to circulate in the outer peripheral direction excluding the opening portion (form one layer) at the position 10 mm distant in the radial direction from the steel pipe.

(Example 2)

As the electric resistance welded pipe welding device in Example 2, the electric resistance welded pipe welding device in the third embodiment illustrated in FIG. 14 to FIG. 16(a) to FIG. 16(c) was used. Concretely, a device including an induction coil having a pair of opening-vicinity conductor parts and two portion circulating conductor parts, which was a water-cooled copper pipe having an outside diameter of 10 mm and having a thickness of 1.5 mm, was used. Here, the opening-vicinity conductor parts were arranged in a range of the position 80 mm upstream in the running direction from the joint portion to the position 100 mm upstream from the position, at the position where the water-cooled copper pipe was put 5 mm outside in the circumferential direction from the opening portion of the open pipe (steel pipe) and 10 mm distant in the radial direction from the steel pipe. Further, as for the two portion circulating conductor parts, the first-portion circulating conductor part was arranged at the position 80 mm upstream in the running direction from the joint portion to be the position of the end portion of the opening-vicinity conductor parts and the second-portion circulating conductor part was arranged at the position 100 mm upstream from the position so that they were each able to circulate in the outer peripheral direction excluding the opening portion (form one layer) at the position 10 mm distant in the radial direction from the steel pipe.

(Example 3)

As the electric resistance welded pipe welding device in Example 3, the electric resistance welded pipe welding device in the second embodiment illustrated in FIG. 10 was used. Concretely, an electric resistance welded pipe welding device was used, in which the same induction coil as in Example 1 above was used and further a ferromagnet core made of ferrite was inserted in the opening portion in a range of the position 50 mm upstream of the induction coil to the position 100 mm upstream. As the ferromagnet, such a T-shaped ferromagnet as illustrated in FIG. 11 was used, and a horizontal portion of the T shape had a length of 50 mm and a width of 50 mm and further a vertical portion of the T shape had a height of 20 mm and a width of 4 mm.

(Example 4)

As the electric resistance welded pipe welding device in Example 4, the electric resistance welded pipe welding device in the fourth embodiment illustrated in FIG. 19 was used. Concretely, an electric resistance welded pipe welding device was used, in which the same induction coil as in Example 2 above was used and further a ferromagnet core made of ferrite was inserted in the opening portion in a range of the position 50 mm upstream of the induction coil to the position 100 mm upstream. As the ferromagnet, such a T-shaped ferromagnet as illustrated in FIG. 11 was used, and a horizontal portion of the T shape had a length of 50 mm and a width of 50 mm and further a vertical portion of the T shape had a height of 20 mm and a width of 4 mm.

(Example 5)

As the electric resistance welded pipe welding device in Example 5, the electric resistance welded pipe welding device in the fifth embodiment illustrated in FIG. 22 to FIG. 24(a) to FIG. 24(c) was used. Concretely, on the outer side of the same induction coil as in Example 2 above, a one-layer water-cooled copper pipe was further arranged with a 1-mm sheet of Teflon (Japanese registered trademark) interposed therebetween and serial connection was made. Incidentally, the current was set to 1500 A, which was half that of Example 2 above, in order to make the magnetic field intensities agree with each other.

(Example 6)

As the electric resistance welded pipe welding device in Example 6, the electric resistance welded pipe welding device in the modified example of the fifth embodiment illustrated in FIG. 27 was used. Concretely, the same constitution as that of the induction coil in Example 5 above was employed and the induction coils and the power supply were connected in parallel. Incidentally, the current was set to 3000 A.

(Example 7)

As the electric resistance welded pipe welding device in Example 7, the electric resistance welded pipe welding device in the sixth embodiment illustrated in FIG. 28 to FIG. 30 was used. Concretely, on the outer side of the same induction coil as in Example 2 above, a one-layer water-cooled copper pipe was further arranged with a 1-mm Teflon sheet interposed therebetween, serial connection was made, and a T-shaped ferrite core (50 mm in length) covering the top of the opening portion was arranged in a range of the position 50 mm upstream on the coil entrance side to the position 100 mm upstream. Incidentally, the current was set to 1500 A, which was half that of Example 2 above, in order to make the magnetic field intensities agree with each other.

(Comparative example 1)

As the electric resistance welded pipe welding device in Comparative example 1, a device including an induction coil arranged so as to stride over an opening portion of an open pipe was used. Concretely, the induction coil in Comparative example 1 is a water-cooled copper pipe with an outside diameter of 10 mm and a thickness of 1.5 mm that was arranged in two layers in the outer peripheral direction with a width of 50 mm therebetween at the position 80 mm distant upstream in the running direction from the joint portion and 10 mm distant in the radial direction from the steel pipe.

[Table 1]

| | HEAT GENERATION AMOUNT RATIO [-] | MAXIMUM MAGNETIC FLUX DENSITY [T] |
|---|---|---|
| EXAMPLE 1 | 1.01 | 0.32 |
| EXAMPLE 2 | 1.02 | 0.33 |
| EXAMPLE 3 | 1.05 | 0.34 |
| EXAMPLE 4 | 1.08 | 0.35 |
| EXAMPLE 5 | 1.01 | 0.35 |
| EXAMPLE 6 | 1.02 | 0.35 |
| EXAMPLE 7 | 1.09 | 0.36 |
| COMPARATIVE EXAMPLE 1 | 1.00 | 0.45 |

As illustrated in Table 1, it was found out that the amount of heat generated at the end face portions of the opening portion when performing the electric resistance welded pipe welding by using each of the electric resistance welded pipe welding devices including the induction coils having the opening-vicinity conductor parts and the portion circulating conductor parts in Example 1 to Example 7 is substantially the same as the amount of heat generated when performing the electric resistance welded pipe welding by using the electric resistance welded pipe welding device including the induction coil arranged so as to stride over the opening portion in Comparative example 1, but the magnetic flux entering the impeder (namely, the maximum magnetic flux density of the impeder) can be reduced by about 30 percent.

It was found out that in Examples 3, 4, and 7 each using the electric resistance welded pipe welding device including the ferromagnet core, in particular, it is possible to increase the total heat generation amount ratio rather than Examples 1, 2, and 5 each using the electric resistance welded pipe welding device not including the ferromagnet core and welding can be performed more efficiently.

Next, there will be explained examples each having a pipe diameter larger than that in Examples 1 to 7 and Comparative example 1 above. Concretely, a steel pipe made of ordinary steel having a pipe diameter $\phi$ of 100 mm and having a thickness of 4 mm was subjected to electric resistance welded pipe welding by applying a current of 4000 A thereto by using electric resistance welded pipe welding devices of Example 8 to Example 13 and Comparative example 2 to be described below, and then the total heat generation amount of end faces of the steel pipe in a range of a joint portion to 700 mm upstream was measured by an infrared imaging device. Results thereof are illustrated in Table 2. Incidentally, in Table 2, a total heat generation amount ratio is described as the total heat generation amount, but this heat generation amount ratio indicates the ratio of the total heat generation amount of the end faces of the steel pipe in each of the examples and the comparative example to the case where the total heat generation amount of end faces of an opening portion obtained when heat is generated by the same current flowing to an ordinary induction coil with the same width and the same distance from a welded portion is set to one. Further, results obtained by calculating the maximum magnetic flux density [T] of an impeder by performing a FEM (Finite Element Method) analysis under the condition of such electric resistance welded pipe welding are also illustrated in Table 2.

(Example 8)

As the electric resistance welded pipe welding device in Example 8, the electric resistance welded pipe welding device in the first embodiment illustrated in FIG. 4 to FIG. 6(a) and FIG. 6(b) was used. Concretely, a device including an induction coil having a pair of opening-vicinity conductor parts and one portion circulating conductor part (first-portion circulating conductor part) on the welded portion side, being a water-cooled copper pipe having an outside diameter of 10 mm and having a thickness of 1.5 mm, was used. Here, the opening-vicinity conductor parts were arranged in a range of the position 120 mm upstream in the running direction from the joint portion to the position 100 mm upstream from the position at the position where the water-cooled copper pipe was put 5 mm outside in the circumferential direction from the opening portion of the open pipe (steel pipe) and 10 mm distant in the radial direction from the steel pipe. Further, the portion circulating conductor part was arranged at the position 120 mm upstream in the running direction from the joint portion to be the position of the end portion on the welded portion side of the opening-vicinity conductor parts so as to circulate in the outer peripheral direction excluding the opening portion (form one layer) at the position 10 mm distant in the radial direction from the steel pipe.

(Example 9)

As the electric resistance welded pipe welding device in Example 9, the electric resistance welded pipe welding device in the third embodiment illustrated in FIG. 14 to FIG. 16(a) to FIG. 16(c) was used. Concretely, a device including an induction coil having a pair of opening-vicinity conductor parts and two portion circulating conductor parts, being a water-cooled copper pipe having an outside diameter of 10 mm and having a thickness of 1.5 mm, was used. Here, the opening-vicinity conductor parts were arranged in a range of the position 120 mm upstream in the running direction from the joint portion to the position 100 mm upstream from the position at the position where the water-cooled copper pipe was put 5 mm outside in the circumferential direction from the opening portion of the open pipe (steel pipe) and 10 mm distant in the radial direction from the steel pipe. Further, as for the two portion circulating conductor parts, the first-portion circulating conductor part was arranged at the position 80 mm upstream in the running direction from the joint portion to be the position of the end portion of the opening-vicinity conductor parts and the second-portion circulating conductor part was arranged at the position 100 mm upstream from the position so that they were each able to circulate in the outer peripheral direction excluding the opening portion (form one layer) at the position 10 mm distant in the radial direction from the steel pipe.

(Example 10)

As the electric resistance welded pipe welding device in Example 10, the electric resistance welded pipe welding device in the second embodiment illustrated in FIG. 10 was used. Concretely, an electric resistance welded pipe welding device was used, in which the same induction coil as in Example 8 above was used and further a ferromagnet core made of ferrite was inserted in the opening portion in a range of the position 50 mm upstream of the induction coil to the position 100 mm upstream. As the ferromagnet core, such a T-shaped ferromagnet as illustrated in FIG. 11 was used, and a horizontal portion of the T shape had a length of 50 mm and a width of 50 mm and further a vertical portion of the T shape had a height of 20 mm and a width of 4 mm.

(Example 11)

As the electric resistance welded pipe welding device in Example 11, the electric resistance welded pipe welding device in the fourth embodiment illustrated in FIG. 19 was used. Concretely, an electric resistance welded pipe welding device was used, in which the same induction coil as in Example 9 above was used and further a ferromagnet core made of ferrite was inserted in the opening portion in a range of the position 50 mm upstream of the induction coil to the position 100 mm upstream. As the ferromagnet core, such a T-shaped ferromagnet as illustrated in FIG. 11 was used, and a horizontal portion of the T shape had a length of 50 mm and a width of 50 mm and further a vertical portion of the T shape had a height of 20 mm and a width of 4 mm.

(Example 12)

As the electric resistance welded pipe welding device in Example 12, the electric resistance welded pipe welding device in the fifth embodiment illustrated in FIG. 22 to FIG. 24(a) to FIG. 24(c) was used. Concretely, on the outer side of the same induction coil as in Example 9 above, a one-layer water-cooled copper pipe was further arranged with a 1-mm Teflon sheet interposed therebetween and serial connection was made. Incidentally, the current was set to 2000 A, which was half that of Example 9 above, in order to make the magnetic field intensities agree with each other.

(Example 13)

As the electric resistance welded pipe welding device in Example 13, the electric resistance welded pipe welding device in the modified example of the fifth embodiment illustrated in FIG. 27 was used. Concretely, the same constitution as that of the induction coil in Example 12 above was employed and the induction coils and the power supply were connected in parallel. Incidentally, the current was set to 4000 A.

(Comparative example 2)

As the electric resistance welded pipe welding device in Comparative example 2, a device including an induction coil arranged so as to stride over an opening portion of an open pipe was used. Concretely, the induction coil in Comparative example 1 is a water-cooled copper pipe with an outside diameter of 10 mm and a thickness of 1.5 mm that was arranged in two layers in the outer peripheral direction with a width of 50 mm therebetween at the position 80 mm distant upstream in the running direction from the joint portion and 10 mm distant in the radial direction from the steel pipe.

EP 3 520 949 B1

[Table 2]

|  | HEAT GENERATION AMOUNT RATIO [-] | MAXIMUM MAGNETIC FLUX DENSITY [T] |
|---|---|---|
| EXAMPLE 8 | 0.97 | 0.35 |
| EXAMPLE 9 | 1.01 | 0.37 |
| EXAMPLE 10 | 1.04 | 0.36 |
| EXAMPLE 11 | 1.07 | 0.38 |
| EXAMPLE 12 | 1.01 | 0.34 |
| EXAMPLE 13 | 1.02 | 0.34 |
| COMPARATIVE EXAMPLE 2 | 1.00 | 0.42 |

As illustrated in Table 2, it was possible to confirm the same tendency as that of the case of the small pipe diameter illustrated in Table 1 even in the case of the large pipe diameter. That is, it was found out that the amount of heat generated at the end face portions of the opening portion when performing the electric resistance welded pipe welding by using each of the electric resistance welded pipe welding devices including the induction coils having the opening-vicinity conductor parts and the portion circulating conductor parts in Example 8 to Example 13 is substantially the same as the amount of heat generated when performing the electric resistance welded pipe welding by using the electric resistance welded pipe welding device including the induction coil arranged so as to stride over the opening portion in Comparative example 2, but the magnetic flux entering the impeder (namely, the maximum magnetic flux density of the impeder) can be reduced by about 20 percent.

It was found out that in Examples 10, 11 each using the electric resistance welded pipe welding device including the ferromagnet core, in particular, it is possible to increase the total heat generation amount ratio rather than Examples 8, 9 each using the electric resistance welded pipe welding device not including the ferromagnet core and welding can be performed more efficiently.

[Industrial Applicability]

The present invention is useful for an electric resistance welded pipe welding device that bends a running metal strip into a cylindrical shape to inductively heat the bent metal strip and welds both end face portions of the metal strip together by current induced in the metal strip.

[Explanation of Codes]

1 open pipe (metal strip)
2 opening portion
2a, 2b end face portion
5 joint portion (squeeze roll unit, welded portion)
6 squeeze roll
7 impeder
8 rod
10, 20, 30, 40, 50, 55, 60 electric resistance welded pipe welding device
100, 300, 500, 550 induced coil
110, 310, 510, 511, 512, 560, 561, 562 opening-vicinity conductor part
120, 320, 520, 521, 522, 570, 571, 572 (first)-portion circulating conductor part
330, 530, 531, 532, 533 (second)-portion circulating conductor part
200, 400, 600 ferromagnet core
R running direction
$C_P$ primary current
40a, 40b, 40c, 40d, 40e, 40f, 40g, 40h induced current
50a, 50b induced current

**Claims**

1. An electric resistance welded pipe welding device (10) for manufacturing an electric resistance welded pipe that melts both end face portions (2a, 2b), of an open pipe (1) having an opening portion (2) extending in a running direction (R), both the end face portions (2a, 2b) that face the opening portion (2) each other from both sides and are made of a pipe material, by induced currents generated by an induction heating means and brings the end face portions (2a, 2b) into contact with each other at a squeeze roll unit (5) while gradually narrowing a gap of the opening portion (2) and welds the end face portions (2a, 2b) together, the electric resistance welded pipe welding device (10) comprising:

   as the induction heating means,
   an induction coil (100; 300; 500),
   the electric resistance welded pipe welding device (10) being **characterised in that** the induction coil (100; 300; 500) is composed of
   a pair of opening-vicinity conductor parts (110; 310; 510) that are extended in the running direction along the end face portions (2a, 2b) at both sides of the opening portion (2) and are arranged in pairs close to both the end face portions (2a, 2b) of the open pipe (1) respectively and apart from an outer peripheral surface of the open pipe (1) at positions not overlapping the opening portion (2) in a plan view; and
   a first-portion circulating conductor part (120; 320; 520) that is integrally provided at at least end portions, of the opening-vicinity conductor parts (110; 310; 510), on the side close to the squeeze roll unit (5) in a longitudinal direction and is arranged apart from the outer peripheral surface of the open pipe (1) so as to circulate around a portion, of the outer peripheral surface of the open pipe (1), excluding the opening portion (2), wherein the paired opening-vicinity conductor parts (110; 310; 510) are configured to generate induced currents to flow along the end face portions (2a, 2b) at both sides of the opening portion (2).

2. The electric resistance welded pipe welding device (10) according to claim 1, wherein
   the induction coil further includes a second-portion circulating conductor part (330; 530) that is integrally provided at end portions, of the opening-vicinity conductor parts (310; 510), on the side far from the squeeze roll unit (5) in the longitudinal direction and is arranged apart from the outer peripheral surface of the open pipe (1) so as to circulate around the portion, of the outer peripheral surface of the open pipe (1), excluding the opening portion (2).

3. The electric resistance welded pipe welding device (10) according to claim 1 or 2, wherein
   at the end portions, of the opening-vicinity conductor parts, on the side close to the squeeze roll unit (5) in the longitudinal direction, the first-portion circulating conductor part (520) is provided in a plurality of layers in serial closed circuits.

4. The electric resistance welded pipe welding device (10) according to claim 1 or 2, further comprising
   a second induction coil (550), provided in parallel to the induction coil (100; 300), wherein the first-portion circulating conductor part (571) and a second first-portion circulating conductor part (572) of the second induction coil are provided in two layers in parallel closed circuits.

5. The electric resistance welded pipe welding device (10) according to any one of claims 1 to 4, further comprising:
   a ferromagnet (200; 400; 600) to be arranged in the opening portion (2) on the upstream side in the running direction (R) relative to the induction coil.

6. An electric resistance welded pipe welding method for manufacturing an electric resistance welded pipe that melts both end face portions (2a, 2b), of an open pipe (1) having an opening portion (2) extending in a running direction (R), both the end face portions (2a, 2b) that face the opening portion (2) each other from both sides and are made of a pipe material, by induced currents generated by an induction heating means and brings the end face portions (2a, 2b) into contact with each other at a squeeze roll unit (5) while gradually narrowing a gap of the opening portion (2) and welds the end face portions (2a, 2b) together, in which

   as the induction heating means,
   an induction coil (100; 300; 500) is provided;
   the electric resistance welded pipe welding method for manufacturing an electric resistance welded pipe being **characterised in that** said induction coil (100; 300; 500) is composed of
   a pair of opening-vicinity conductor parts (110; 310; 510) that are extended in the running direction along the end face portions at both sides of the opening portion and are arranged in pairs close to both the end face portions (2a, 2b) of the open pipe (1) respectively and apart from an outer peripheral surface of the open pipe (1) at positions not overlapping the opening portion (2) in a plan view; and
a first-portion circulating conductor part (120; 320; 520) that is integrally provided at at least end portions, of the opening-vicinity conductor parts (110; 310; 510), on the side close to the squeeze roll unit (5) in a longitudinal direction and is arranged apart from the outer peripheral surface of the open pipe (1) so as to circulate around a portion, of the outer peripheral surface of the open pipe (1), excluding the opening portion (2) is included, the electric resistance welded pipe welding method comprising:

> generating induced currents to flow along the end face portions (2a, 2b) at both sides of the opening portion (2) by the paired opening-vicinity conductor parts (110; 310; 510); and
> generating an induced current to flow along the portion, of the outer peripheral surface of the open pipe (1), excluding the opening portion (2) by the first-portion circulating conductor part (120; 320; 520).

7. The electric resistance welded pipe welding method according to claim 6, wherein
the induction coil further includes a second-portion circulating conductor part (330; 530) that is integrally provided at end portions, of the opening-vicinity conductor parts (310; 510), on the side far from the squeeze roll unit (5) in the longitudinal direction and is arranged apart from the outer peripheral surface of the open pipe (1) so as to circulate around the portion, of the outer peripheral surface of the open pipe (1), excluding the opening portion (2).

8. The electric resistance welded pipe welding method according to claim 6 or 7, wherein
at the end portions, of the opening-vicinity conductor parts, on the side close to the squeeze roll unit (5) in the longitudinal direction, the first-portion circulating conductor part (520) is provided in a plurality of layers in serial closed circuits.

9. The electric resistance welded pipe welding method according to claim 6 or 7, further comprising
providing a second induction coil (550), in parallel to the induction coil (100; 300), wherein the first-portion circulating conductor part (571) and a second first-portion circulating conductor part (572) of the second induction coil are provided in two layers in parallel closed circuits.

10. The electric resistance welded pipe welding method according to any one of claims 6 to 9, wherein
a ferromagnet (200; 400; 600) is arranged in the opening portion (2) on the upstream side in the running direction (R) relative to the induction coil.

## Patentansprüche

1. Widerstandsrohrschweißvorrichtung (10) zum Herstellen eines widerstandsgeschweißten Rohrs, die beide Stirnflächenabschnitte (2a, 2b) eines offenen Rohrs (1) mit einem sich in einer Laufrichtung (R) erstreckenden Öffnungsabschnitt (2), wobei beide Stirnflächenabschnitte (2a, 2b), die dem Öffnungsabschnitt (2) von beiden Seiten zugewandt sind und aus einem Rohrmaterial gefertigt sind, durch induzierte Ströme, die durch eine Induktionsheizeinrichtung erzeugt werden, schmilzt und die Stirnflächenabschnitte an einer Quetschwalzeneinheit (5) miteinander in Kontakt bringt, während sie einen Spalt des Öffnungsabschnitts (2) allmählich verengt und die Stirnflächenabschnitte (2a, 2b) miteinander verschweißt, wobei die Widerstandsschweißvorrichtung (10) aufweist:

> als Induktionsheizeinrichtung,
> eine Induktionsspule (100; 300; 500), wobei die Widerstandsrohrschweißvorrichtung (10) **dadurch gekennzeichnet ist, dass** die Induktionsspule (100; 300; 500) aufweist:
>
>> ein Paar von öffnungsnahen Leiterteilen (110; 310; 510), die sich in der Laufrichtung entlang der Stirnflächenabschnitte (2a, 2b) an beiden Seiten des Öffnungsabschnitts (2) erstrecken und jeweils paarweise nahe den beiden Stirnflächenabschnitten (2a, 2b) des offenen Rohrs (1) und von einer äußeren Umfangsfläche des offenen Rohrs (1) entfernt an Positionen angeordnet sind, die den Öffnungsabschnitt (2) in einer Draufsicht nicht überlappen; und
>> ein einen ersten Abschnitt umgebendes Leiterteil (120; 320; 520), das einstückig mindestens an Endabschnitten der öffnungsnahen Leiterteile (110; 310; 510) auf der Seite nahe der Quetschwalzeneinheit (5) in einer Längsrichtung vorgesehen und von der äußeren Umfangsfläche des offenen Rohrs (1) beabstandet angeordnet ist, so dass es einen Abschnitt der äußeren Umfangsfläche des offenen Rohrs (1) mit Ausnahme des Öffnungsabschnitts (2) umgibt, wobei

die paarweisen öffnungsnahen Leiterteile (110; 310; 510) zum Erzeugen von induzierten Strömen konfiguriert sind, die entlang der Stirnflächenabschnitte (2a, 2b) auf beiden Seiten des Öffnungsabschnitts (2) fließen.

2. Widerstandsrohrschweißvorrichtung (10) nach Anspruch 1, wobei die Induktionsspule ferner ein einen zweiten Abschnitt umgebendes Leiterteil (330; 530) aufweist, das einstückig an Endabschnitten der öffnungsnahen Leiterteile (310; 510) auf der Seite fern der Quetschwalzeneinheit (5) in der Längsrichtung vorgesehen und von der äußeren Umfangsfläche des offenen Rohrs (1) beabstandet angeordnet ist, so dass es den Abschnitt der äußeren Umfangsfläche des offenen Rohrs (1) mit Ausnahme des Öffnungsabschnitts (2) umgibt.

3. Widerstandsrohrschweißvorrichtung (10) nach Anspruch 1 oder 2, wobei
an den Endabschnitten der öffnungsnahen Leiterteile auf der Seite nahe der Quetschwalzeneinheit (5) in der Längsrichtung das den ersten Abschnitt umgebende Leiterteil (520) in mehreren Schichten in seriell geschlossenen Kreisen vorgesehen ist.

4. Widerstandsrohrschweißvorrichtung (10) nach Anspruch 1 oder 2, ferner aufweisend
eine zweite Induktionsspule (550), die parallel zur Induktionsspule (100; 300) vorgesehen ist, wobei das den ersten Abschnitt umgebende Leiterteil (571) und ein zweites den ersten Abschnitt umgebendes Leiterteil (572) der zweiten Induktionsspule in zwei Schichten in parallelen geschlossenen Kreisen vorgesehen sind.

5. Widerstandsrohrschweißvorrichtung (10) nach einem der Ansprüche 1 bis 4, ferner aufweisend:
einen Ferromagneten (200; 400; 600), der im Öffnungsabschnitt (2) auf der stromaufwärtigen Seite in Laufrichtung (R) relativ zur Induktionsspule anzuordnen ist.

6. Schweißverfahren für widerstandsgeschweißte Rohre zum Herstellen eines widerstandsgeschweißten Rohrs, das beide Stirnflächenabschnitte (2a, 2b) eines offenen Rohrs (1) mit einem sich in einer Laufrichtung (R) erstreckenden Öffnungsabschnitt (2), wobei beide Stirnflächenabschnitte (2a, 2b) dem Öffnungsabschnitt (2) von beiden Seiten zugewandt sind und aus einem Rohrmaterial gefertigt sind, durch induzierte Ströme, die durch eine Induktionsheizeinrichtung erzeugt werden, schmilzt und die Stirnflächenabschnitte (2a, 2b) an einer Quetschwalzeneinheit (5) miteinander in Kontakt bringt, während sie einen Spalt des Öffnungsabschnitts (2) allmählich verengt und die Stirnflächenabschnitte (2a, 2b) miteinander verschweißt, wobei

als Induktionsheizeinrichtung,
eine Induktionsspule (100; 300; 500) vorgesehen ist;
wobei das Schweißverfahren für widerstandsgeschweißte Rohre zur Herstellung eines widerstandsgeschweißten Rohrs **dadurch gekennzeichnet ist, dass** die Induktionsspule (100; 300; 500) aufweist:

einem Paar von öffnungsnahen Leiterteilen (110; 310; 510), die sich in der Laufrichtung entlang der Stirnflächenabschnitte an beiden Seiten des Öffnungsabschnitts erstrecken und jeweils paarweise nahe den beiden Stirnflächenabschnitten (2a, 2b) des offenen Rohrs (1) und von einer äußeren Umfangsfläche des offenen Rohrs (1) entfernt an Positionen angeordnet sind, die den Öffnungsabschnitt (2) in einer Draufsicht nicht überlappen; und
ein einen ersten Abschnitt umgebendes Leiterteil (120; 320; 520), das einstückig mindestens an Endabschnitten der öffnungsnahen Leiterteile (110; 310; 510) auf der Seite nahe der Quetschwalzeneinheit (5) in einer Längsrichtung vorgesehen und von der äußeren Umfangsfläche des offenen Rohrs (1) beabstandet angeordnet ist, so dass es einen Abschnitt der äußeren Umfangsfläche des offenen Rohrs (1) mit Ausnahme des Öffnungsabschnitts (2) umgibt, wobei das Schweißverfahren für widerstandsgeschweißte Rohre aufweist:

Erzeugen von induzierten Strömen, die entlang der Stirnflächenabschnitte (2a, 2b) an beiden Seiten des Öffnungsabschnitts (2) durch die paarweisen öffnungsnahen Leiterteile (110; 310; 510) fließen; und
Erzeugen eines induzierten Stroms, der entlang des Abschnitts der äußeren Umfangsfläche des offenen Rohrs (1) mit Ausnahme des Öffnungsabschnitts (2) durch das den ersten Abschnitt umgebende Leiterteil (120; 320; 520) fließt.

7. Schweißverfahren für widerstandsgeschweißte Rohre nach Anspruch 6, wobei die Induktionsspule ferner ein einen zweiten Abschnitt umgebendes Leiterteil (330; 530) aufweist, das einstückig an Endabschnitten der öffnungsnahen Leiterteile (310; 510) auf der Seite fern der Quetschwalzeneinheit (5) in der Längsrichtung vorgesehen und von der äußeren Umfangsfläche des offenen Rohrs (1) beabstandet angeordnet ist, so dass es den Abschnitt der äußeren Umfangsfläche des offenen Rohrs (1) mit Ausnahme des Öffnungsabschnitts (2) umgibt.

**8.** Schweißverfahren für widerstandsgeschweißte Rohre nach Anspruch 6 oder 7, wobei an den Endabschnitten der öffnungsnahen Leiterteile auf der Seite nahe der Quetschwalzeneinheit (5) in der Längsrichtung das den ersten Abschnitt umgebende Leiterteil (520) in mehreren Schichten in seriell geschlossenen Kreisen vorgesehen ist.

**9.** Schweißverfahren für widerstandsgeschweißte Rohre nach Anspruch 6 oder 7, ferner aufweisend Vorsehen einer zweiten Induktionsspule (550) parallel zur Induktionsspule (100; 300), wobei das den ersten Abschnitt umgebende Leiterteil (571) und ein zweites den ersten Abschnitt umgebendes Leiterteil (572) der zweiten Induktionsspule in zwei Schichten in parallelen geschlossenen Kreisen vorgesehen sind.

**10.** Schweißverfahren für widerstandsgeschweißte Rohre nach einem der Ansprüche 6 bis 9, wobei ein Ferromagnet (200; 400; 600) im Öffnungsabschnitt (2) auf der stromaufwärtigen Seite in Laufrichtung (R) relativ zur Induktionsspule angeordnet ist.

**Revendications**

**1.** Dispositif de soudage de tuyau soudé par résistance électrique (10) pour la fabrication d'un tuyau soudé par résistance électrique qui fait fondre les deux portions de faces d'extrémités (2a, 2b), d'un tuyau ouvert (1) ayant une portion d'ouverture (2) s'étendant dans une direction de circulation (R), les deux portions de faces d'extrémités (2a, 2b) qui font face à la portion d'ouverture (2) chacune à partir des deux côtés et sont constituées d'un matériau de tuyau, par des courants induits produits par un moyen de chauffage par induction et met les portions de faces d'extrémités (2a, 2b) en contact l'une avec l'autre sur une unité de cylindre de pincement (5) tout en rétrécissant progressivement un espace de la portion d'ouverture (2) et soude les portions de faces d'extrémités (2a, 2b) ensemble, le dispositif de soudage de tuyau soudé par résistance électrique (10) comprenant :

comme le moyen de chauffage par induction, une bobine d'induction (100 ; 300 ; 500), le dispositif de soudage de tuyau soudé par résistance électrique (10) étant **caractérisé en ce que** la bobine d'induction (100 ; 300 ; 500) est constituée d'une paire de parties de conducteur au voisinage de l'ouverture (110 ; 310 ; 510) qui s'étendent dans la direction de circulation le long des portions de faces d'extrémités (2a, 2b) sur les deux côtés de la portion d'ouverture (2) et sont disposées en paires à proximité des deux portions de faces d'extrémités (2a, 2b) du tuyau ouvert (1) respectivement et à distance d'une surface périphérique externe du tuyau ouvert (1) à des positions ne chevauchant pas la portion d'ouverture (2) dans une vue de plan ; et une partie de conducteur circulant autour d'une première portion (120 ; 320 ; 520) qui est fournie en une seule pièce sur au moins les portions d'extrémités, des parties de conducteur au voisinage de l'ouverture (110 ; 310 ; 510), sur le côté proche de l'unité de cylindre de pincement (5) dans une direction longitudinale et est disposée à distance de la surface périphérique externe du tuyau ouvert (1) afin de circuler autour d'une portion, de la surface périphérique externe du tuyau ouvert (1), excluant la portion d'ouverture (2), dans lequel les parties de conducteur au voisinage de l'ouverture appariées (110 ; 310 ; 510) sont configurées pour produire des courants induits qui s'écoulent le long des portions de faces d'extrémités (2a, 2b) sur les deux côtés de la portion d'ouverture (2).

**2.** Dispositif de soudage de tuyau soudé par résistance électrique (10) selon la revendication 1, dans lequel la bobine d'induction inclut de plus une partie de conducteur circulant autour d'une seconde portion (330 ; 530) qui est fournie en une seule pièce aux portions d'extrémités, des parties de conducteur au voisinage de l'ouverture (310 ; 510), sur le côté éloigné de l'unité de rouleau de pincement (5) dans la direction longitudinale et est disposée à distance de la surface périphérique externe du tuyau ouvert (1) afin de circuler autour de la portion, de la surface périphérique externe du tuyau ouvert (1), excluant la portion d'ouverture (2).

**3.** Dispositif de soudage de tuyau soudé par résistance électrique (10) selon la revendication 1 ou 2, dans lequel aux portions d'extrémités, des parties de conducteur au voisinage de l'ouverture, sur le côté proche de l'unité de cylindre de pincement (5) dans la direction longitudinale, la partie de conducteur circulant autour de la première portion (520) est fournie dans plusieurs couches dans des circuits fermés en série.

**4.** Dispositif de soudage de tuyau soudé par résistance électrique (10) selon la revendication 1 ou 2, comprenant de plus une seconde bobine d'induction (550), fournie en parallèle à la bobine d'induction (100 ; 300), dans lequel la partie de conducteur circulant autour de la première portion (571) et une seconde partie de conducteur circulant autour d la première portion (572) de la seconde bobine d'induction sont fournies dans deux couches dans des circuits fermés parallèles.

**5.** Dispositif de soudage de tuyau soudé par résistance électrique (10) selon l'une quelconque des revendications 1 à 4, comprenant de plus :
un matériau ferromagnétique (200 ; 400 ; 600) à disposer dans la portion d'ouverture (2) sur le côté amont dans la direction de circulation (R) par rapport à la bobine d'induction.

**6.** Procédé de soudage de tuyau soudé par résistance électrique pour la fabrication d'un tuyau soudé par résistance électrique qui fait fondre les deux portions de faces d'extrémités (2a, 2b), d'un tuyau ouvert (1) ayant une portion d'ouverture (2) s'étendant dans une direction de circulation (R), les deux portions de faces d'extrémités (2a, 2b) qui font face à la portion d'ouverture (2) chacune à partir des deux côtés et sont constituées d'un matériau de tuyau, par des courants induits produits par un moyen de chauffage par induction et met les portions de faces d'extrémités (2a, 2b) en contact l'une avec l'autre sur une unité de cylindre de pincement (5) tout en rétrécissant progressivement un espace de la portion d'ouverture (2) et soude les portions de faces d'extrémités (2a, 2b) ensemble, dans lequel

comme le moyen de chauffage par induction,
une bobine d'induction (100 ; 300 ; 500) est fournie ;
le procédé de soudage de tuyau soudé par résistance électrique pour la fabrication d'un tuyau soudé par résistance électrique étant **caractérisé en ce que** ladite bobine d'induction (100 ; 300 ; 500) est constituée de une paire de parties de conducteur au voisinage de l'ouverture (110 ; 310 ; 510) qui s'étendent dans la direction de circulation le long des portions de faces d'extrémités sur les deux côtés de la portion d'ouverture et sont disposées en paires à proximité des deux portions de faces d'extrémités (2a, 2b) du tuyau ouvert (1) respectivement et à distance d'une surface périphérique externe du tuyau ouvert (1) à des positions ne chevauchant pas la portion d'ouverture (2) dans une vue de plan ; et
une partie de conducteur circulant autour d'une première portion (120 ; 320 ; 520) qui est fournie en une seule pièce sur au moins les portions d'extrémités, des parties de conducteur au voisinage de l'ouverture (110 ; 310 ; 510), sur le côté proche de l'unité de cylindre de pincement (5) dans une direction longitudinale et est disposée à distance de la surface périphérique externe du tuyau ouvert (1) afin de circuler autour d'une portion, de la surface périphérique externe du tuyau ouvert (1), excluant la portion d'ouverture (2), le procédé de soudage de tuyau soudé par résistance électrique comprenant :

la production de courants induits qui s'écoulent le long des portions de faces d'extrémités (2a, 2b) sur les deux côtés de la portion d'ouverture (2) par les parties de conducteur au voisinage de l'ouverture appariées (110 ; 310 ; 510) ; et
la production d'un courant induit qui s'écoule le long de la portion, de la surface périphérique externe du tuyau ouvert (1), excluant la portion d'ouverture (2) par la partie de conducteur circulant autour de la première portion (120 ; 320 ; 520).

**7.** Procédé de soudage de tuyau soudé par résistance électrique selon la revendication 6, dans lequel
la bobine d'induction inclut de plus une partie de conducteur circulant autour d'une seconde portion (330 ; 530) qui est fournie en une seule pièce aux portions d'extrémités, des parties de conducteur au voisinage de l'ouverture (310 ; 510), sur le côté éloigné de l'unité de cylindre de pincement (5) dans la direction longitudinale et est disposée à distance de la surface périphérique externe du tuyau ouvert (1) afin de circuler autour de la portion, de la surface périphérique externe du tuyau ouvert (1), excluant la portion d'ouverture (2).

**8.** Procédé de soudage de tuyau soudé par résistance électrique selon la revendication 6 ou 7, dans lequel
aux portions d'extrémités, des parties de conducteur au voisinage de l'ouverture, sur le côté proche de l'unité de cylindre de pincement (5) dans la direction longitudinale, la partie de conducteur circulant autour de la première portion (520) est fournie dans plusieurs couches dans des circuits fermés en série.

**9.** Procédé de soudage de tuyau soudé par résistance électrique selon la revendication 6 ou 7, comprenant de plus la fourniture d'une seconde bobine d'induction (550), en parallèle à la bobine d'induction (100 ; 300), dans lequel la partie de conducteur circulant autour de la première portion (571) et une seconde partie de conducteur circulant autour de la première portion (572) de la seconde bobine d'induction sont fournies dans deux couches dans des circuits fermés parallèles.

10. Procédé de soudage de tuyau soudé par résistance électrique selon l'une quelconque des revendications 6 à 9, dans lequel
un matériau ferromagnétique (200 ; 400 ; 600) est disposé dans la portion d'ouverture (2) sur le côté amont dans la direction de circulation (R) par rapport à la bobine d'induction.

**FIG.1**

**FIG.2**

**FIG.3**

FIG.4

FIG.5

(a)

(b)

**FIG.6**

(a)
I-I CROSS SECTION

(b)
II-II CROSS SECTION

**FIG.7**

**FIG.8**

**FIG.9**

**FIG.10**

**FIG.11**

**FIG.12**

**FIG.13**

**FIG.14**

## FIG.15

(a)

(b)

## FIG.16

(a)
I-I CROSS SECTION

(b)
II-II CROSS SECTION

(c)
III-III CROSS SECTION

**FIG.17**

**FIG.18**

**FIG.19**

**FIG.20**

**FIG.21**

**FIG.22**

## FIG.23

(a)

(b)

## FIG.24

(a)
I-I CROSS SECTION

(b)
II-II CROSS SECTION

(c)
III-III CROSS SECTION

FIG.25

FIG.26

FIG.27

**FIG.28**

**FIG.29**

**FIG.30**

**EP 3 520 949 B1**

**REFERENCES CITED IN THE DESCRIPTION**

**Patent documents cited in the description**

- JP 2014027565 A
- JP 2015134379 A
- JP S62176085 A
- JP S60124482 A
- WO 2011034119 A